(19) Europäisches Patentamt
European Patent Office
Office européen des brevets

(11) **EP 4 618 022 A1**

(12) **EUROPEAN PATENT APPLICATION**
published in accordance with Art. 153(4) EPC

(43) Date of publication:
**17.09.2025 Bulletin 2025/38**

(21) Application number: 23909871.8

(22) Date of filing: **27.11.2023**

(51) International Patent Classification (IPC):
**G06T 15/00** (2011.01)    **G06F 3/01** (2006.01)

(52) Cooperative Patent Classification (CPC):
**G06F 3/01; G06T 15/00**

(86) International application number:
**PCT/CN2023/134511**

(87) International publication number:
**WO 2024/139940 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.12.2022  CN 202211696125**

(71) Applicant: Beijing Unicorn Technology Co., Ltd.
**Beijing 100098 (CN)**

(72) Inventors:
• LIU, Wenzhi
  **Beijing 100098 (CN)**
• YIN, Hui
  **Beijing 100098 (CN)**

(74) Representative: **Grünecker Patent- und
Rechtsanwälte
PartG mbB
Leopoldstraße 4
80802 München (DE)**

(54) **METHOD AND APPARATUS FOR DISPLAYING PICTURE ON HEAD-MOUNTED DISPLAY DEVICE, SYSTEM AND DEVICE**

(57)    The present disclosure provides a method, apparatus and system for displaying an image on a head-mounted display and a device. Specific implementation solutions are as follows: rendering a to-be-displayed image of a head-mounted display based on a preset position and a preset attitude in a coordinate system of the head-mounted display; selecting a target corrected attitude from a corrected attitude sequence for the rendered to-be-displayed image; wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment of that historical moment, and the preset attitude; adjusting the rendered to-be-displayed image based on the preset position and the target corrected attitude to obtain an adjusted image; and displaying the adjusted image through the head-mounted display.

Render a to-be-displayed image on a head-mounted display based on a preset position and a preset attitude in a coordinate system of the head-mounted display ⟶ 120

Select a target corrected attitude from a corrected attitude sequence for the rendered to-be-displayed image; wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment of that historical moment, and the preset attitude ⟶ 130

Adjust the rendered to-be-displayed image based on the preset position and the target corrected attitude to obtain an adjusted image ⟶ 140

Display the adjusted image through the head-mounted display ⟶ 150

Fig. 1

# Description

The present disclosure claims the priority of the Chinese patent application filed with the Chinese Patent Office on Dec. 28, 2022, with an application number of CN 202211696125.3 and entitled "Method, Apparatus, System and Device for Displaying Images on Head-mounted display", the contents of which are incorporated herein by reference in its entirety.

## TECHNICAL FIELD

The present disclosure relates to the technical field of head-mounted displays, in particular to a method, apparatus, system and device for displaying images on a head-mounted display.

## BACKGROUND

Head-mounted displays that adopt technologies such as augmented reality (AR) and virtual reality (VR) are being applied more and more widely. The head-mounted displays can be used for content display, such as displaying movie images, game images, web pages, and so on.

## SUMMARY

Embodiments of the present disclosure provide a method, apparatus and system for displaying images on a head-mounted display and a device thereof.

According to one aspect of the embodiments of the present disclosure, a method for displaying an image on a head-mounted display is provided, and the method includes: rendering a to-be-displayed image of the head-mounted display based on a preset position and a preset attitude in a coordinate system of the head-mounted display; selecting a target corrected attitude from a corrected attitude sequence for the rendered to-be-displayed image; wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment to that historical moment, and the preset attitude; adjusting the rendered to-be-displayed image based on the preset position and the target corrected attitude to obtain an adjusted image; and displaying the adjusted image through the head-mounted display.

According to another aspect of the embodiments of the present disclosure, an apparatus for displaying an image on a head-mounted display is provided, and the apparatus includes: a rendering module configured to render a to-be-displayed image of the head-mounted display based on a preset position and a preset attitude in a coordinate system of the head-mounted display; a selection module configured to select a target corrected attitude from a corrected attitude sequence for the rendered to-be-displayed image; wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment to that historical moment, and the preset attitude; an adjustment module configured to adjust the rendered to-be-displayed image based on the preset position and the target corrected attitude to obtain an adjusted image; and a display module configured to display the adjusted image through the head-mounted display.

According to still another aspect of the embodiments of the present disclosure, a system for displaying an image on a head-mounted display is provided, and the system includes: a vehicle infotainment system, an adapter, and a head-mounted display, wherein the head-mounted display is connected to the vehicle infotainment system through the adapter; the vehicle infotainment system is configured to render a to-be-displayed image of the head-mounted display based on a preset position and a preset attitude in the coordinate system of the head-mounted display, and send the rendered to-be-displayed image to the adapter; the adapter is configured to select a target corrected attitude from a corrected attitude sequence for the rendered to-be-displayed image, and adjust the rendered to-be-displayed image based on the preset position and the target corrected attitude to obtain an adjusted image; wherein the corrected attitude sequence includes the corrected attitude at each of the plurality of historical moments; the corrected attitude corresponding to any non-earliest historical moment among the plurality of historical moments is determined based on angular velocity data of the head-mounted display at that historical moment, the corrected attitude corresponding to the previous historical moment to that historical moment, and the preset attitude, and the angular velocity data is collected by the head-mounted display and sent to the adapter; and the head-mounted display is configured to display the adjusted image.

According to still another aspect of the embodiments of the present disclosure, an electronic device is provided, and the electronic device includes: a processor, and a memory configured to store executable instructions for the processor; wherein the processor is configured to read executable instructions from the memory and execute the instructions to implement the above method for displaying an image at a head-mounted display.

According to still another aspect of the present disclosure, a computer-readable storage medium is provided, wherein the storage medium stores a computer program, and the computer program is configured to perform the above method for displaying an image on a head-mounted display.

According to still another aspect of the present disclosure, a computer program product is provided, wherein the computer program product includes computer program instructions, and when being executed, the program instructions perform the above method for displaying an image on a head-mounted display.

BRIEF DESCRIPTION OF THE DRAWINGS

The above and other objects, features and advantages of the present disclosure will become more apparent from a more detailed description of embodiments of the present disclosure in conjunction with the accompanying drawings. The accompanying drawings are used to provide further understanding of embodiments of the present disclosure, and form part of the specification, and are used, together with embodiments of the present disclosure, for explaining the present disclosure, but do not limit the present disclosure. In the accompanying drawings, the same reference numerals usually represent the same components or steps.

Fig. 1 is a flow diagram of a method for displaying an image on a head-mounted display provided in an exemplary embodiment of the present disclosure.

Fig. 2 is a flow diagram of a method for displaying an image on a head-mounted display provided in another exemplary embodiment of the present disclosure.

Fig. 3 is a schematic diagram of a calculation process of a corrected attitude in the method for displaying an image on a head-mounted display provided in another exemplary embodiment of the present disclosure.

Fig. 4-1 is a first schematic diagram of a movable platform on which the head-mounted display is located in an exemplary embodiment of the present disclosure.

Fig. 4-2 is a second schematic diagram of a movable platform on which the head-mounted display is located in an exemplary embodiment of the present disclosure.

Fig. 5 is a flow diagram of a method for displaying an image on a head-mounted display provided in another exemplary embodiment of the present disclosure.

Fig. 6 is a schematic diagram of a timeline involved in a first preset working mode and a second preset working mode in an exemplary embodiment of the present disclosure.

Fig. 7 is a flow diagram of a method for displaying an image on a head-mounted display provided in another exemplary embodiment of the present disclosure.

Fig. 8 is a flow diagram of a method for displaying an image on a head-mounted display provided in still another exemplary embodiment of the present disclosure.

Fig. 9 is a schematic diagram of a timeline involved in a third preset working mode in an exemplary embodiment of the present disclosure.

Fig. 10 is a flow diagram of a method for displaying an image on a head-mounted display provided in a further exemplary embodiment of the present disclosure.

Fig. 11-1 is a first schematic diagram comparing display effects of the head-mounted display in the first preset working mode and the third preset working mode under a vehicle usage scenario.

Fig. 11-2 is a second schematic diagram comparing display effects of the head-mounted display in the first preset working mode and the third preset working mode under a vehicle usage scenario.

Fig. 11-3 is a third schematic diagram comparing display effects of the head-mounted display in the first preset working mode and the third preset working mode under a vehicle usage scenario.

Fig. 11-4 is a fourth schematic diagram comparing display effects of the head-mounted display in the first preset working mode and the third preset working mode under a vehicle usage scenario.

Fig. 12 is a schematic diagram of a coordinate system of the head-mounted display in an exemplary embodiment of the present disclosure.

Fig. 13-1 is a first schematic diagram comparing display effects of the head-mounted display in the first preset working mode and the second preset working mode under another vehicle usage scenario.

Fig. 13-2 is a second schematic diagram comparing display effects of the head-mounted display in the first preset working mode and the second preset working mode under another vehicle usage scenario.

Fig. 13-3 is a third schematic diagram comparing display effects of the head-mounted display in the first preset working mode and the second preset working mode under another vehicle usage scenario.

Fig. 13-4 is a fourth schematic diagram comparing display effects of the head-mounted display in the first preset working mode and the second preset working mode under another vehicle usage scenario.

Fig. 14 is a schematic diagram of still another vehicle usage scenario.

Fig. 15-1 is a first schematic diagram comparing display effects of the head-mounted display in the first preset working mode and the second preset working mode under still another vehicle usage scenario.

Fig. 15-2 is a second schematic diagram comparing display effects of the head-mounted display in the first preset working mode and the second preset working mode under still another vehicle usage scenario.

Fig. 15-3 is a third schematic diagram comparing display effects of the head-mounted display in the first preset working mode and the second preset working mode under still another vehicle usage scenario.

Fig. 15-4 is a fourth schematic diagram comparing display effects of the head-mounted display in the first preset working mode and the second preset working mode under still another vehicle usage scenario.

Fig. 15-5 is a fifth schematic diagram comparing display effects of the head-mounted display in the first preset working mode and the second preset working mode under still another vehicle usage scenario.

Fig. 15-6 is a six schematic diagram comparing display effects of the head-mounted display in the first preset working mode and the second preset working mode under still another vehicle usage scenario.

Fig. 16 is a structural schematic diagram of an apparatus for displaying an image on a head-mounted display provided in an exemplary embodiment of the present disclosure.

Fig. 17 is a structural schematic diagram of an apparatus for displaying an image on a head-mounted display provided in another exemplary embodiment of the present disclosure.

Fig. 18 is a structural schematic diagram of an apparatus for displaying an image on a head-mounted display provided in still another exemplary embodiment of the present disclosure.

Fig. 19 is a structural schematic diagram of the part for calculating the corrected attitude in an apparatus for displaying an image on a head-mounted display according to yet another exemplary embodiment of the present disclosure.

Fig. 20 is a structural schematic diagram of an apparatus for displaying an image on a head-mounted display provided in yet another exemplary embodiment of the present disclosure.

Fig. 21 is a structural schematic diagram of a system for displaying an image on a head-mounted display provided in an exemplary embodiment of the present disclosure.

Fig. 22 is a schematic diagram of the working principle of a system for displaying an image on a head-mounted display provided in an exemplary embodiment of the present disclosure.

Fig. 23 is a structural diagram of an electronic device provided in an exemplary embodiment of the present disclosure.

## DETAILED DESCRIPTION

Exemplary embodiments of the present disclosure will be described in detail below with reference to the drawings. Apparently, the described embodiments are merely part rather than all of the embodiments of the present disclosure. The present disclosure is not limited by the described exemplary embodiments.

It is to be noted that unless specifically stated otherwise, the relative arrangement of components and steps, numerical expressions and numerical values set forth in these embodiments do not limit the scope of the present disclosure.

It may be understood by those skilled in the art that the terms "first", "second" and the like in the embodiments of the present disclosure are only used to distinguish between different steps, devices or modules, etc., and do not represent any particular technical meaning or indicate an inevitable logical order thereof. "A plurality of" may refer to two or more, and "at least one" may refer to one, two, or more.

It should also be understood that the number of any component, data, or structure mentioned in embodiments of the present disclosure may generally be understood to be one or more, unless explicitly defined or indicated otherwise by the context.

Additionally, the term "and/or" in the present disclosure merely represents an association relationship describing associated objects, indicating there may be three relationships. For example, A and/or B may indicate three situations: A exists alone; both A and B exist; and B exists alone. The character "/" in the present disclosure generally indicates that the associated objects prior to and following it are in an "or" relationship.

It should also be understood that description of the various embodiments in the present disclosure emphasizes differences between the various embodiments. For their identical aspects or similarities, reference may be made to each other. The sizes of various parts shown in the drawings are not drawn according to actual proportional relationships.

The following description of at least one exemplary embodiment is actually only illustrative, and in no way serves as any limitation on the present disclosure and its application or use. Technologies, methods, and devices known to those of ordinary skill in the related art may not be discussed in detail, but where appropriate, the technologies, methods, and devices should be regarded as part of the specification.

It should be noted that similar reference numerals and letters denote similar items in the following drawings, so once a certain item is defined in one drawing, it does not need to be further discussed in subsequent drawings.

Embodiments of the present disclosure may be applied to electronic devices such as terminal devices, computer systems, servers, etc., which may operate with numerous other general-purpose or specialized computing system environments or configurations. Examples of well-known terminal devices, computing systems, environments, and/or configurations suitable for use with electronic devices such as terminal devices, computer systems, servers, etc. include, but are not limited to: personal computer systems, server computer systems, thin clients, thick clients, handheld or laptop devices, microprocessor-based systems, set-top boxes, programmable consumer electronics, network personal computers, minicomputer systems, mainframe computer systems, and distributed cloud computing technology environments that include any system described above, and so on.

Electronic devices such as terminal devices, computer systems, servers, etc. may be described in the general context of computer system executable instructions (such as program modules) executed by a computer system. Generally, program modules may include routines, programs, object programs, components, logic, data structures, etc., and these program modules perform specific tasks or implement specific abstract data types. The computer systems/servers may be implemented in a distributed cloud computing environment, in which tasks are performed by remote processing devices linked through a communication network. In the distributed cloud computing environment, the program modules may be located on a local or remote computing system storage medium that includes a storage device.

Exemplary overview

Generally, a head-mounted display (HMD) device can be used for image display. For example, the web pages, video playback interfaces, application (APP) interfaces and the like can be displayed by the head-mounted display.

It should be noted that, the head-mounted display can also be called a head-mounted display (HMD) or a head display. The head-mounted display can be configured to achieve extended reality (XR) effects, such as augmented reality (AR) effects, virtual reality (VR) effects, mixed reality (MR) effects, etc. For example, in some scenarios, since the head-mounted display can create a unique sense of immersion, when the head-mounted display is used, a user can subjectively feel that he is in a space that is isolated from reality, and this space can serve as a virtual space of the head-mounted display.

It can be understood that, the head-mounted display can be presented in such forms as glasses or helmets.

In some optional embodiments, the head-mounted display may be in the form of a split type device, and the split type head-mounted display requires an additional computing device. A head-mounted display can be worn on the head of a user to display an image and the additional computing device may have at least one of a data processing capability and an image rendering capability. The computing device is communicatively connected to the head-mounted display, and the computing device can provide data carrying the to-be-displayed images to the head-mounted display. The head-mounted display can use an optical system to display an image.

The head-mounted display can collect data through its own sensors, such as an inertial measurement unit (IMU) and cameras. The head-mounted display can send the above collected data to the computing device, and the computing device uses the data to calculate at least one of the position, attitude, or pose of the head-mounted display for adjusting the to-be-displayed image. In some embodiments, the computing device may also supply electric energy to the head-mounted display. The split type head-mounted display may also be communicatively connected to a control device for controlling the display image. The computing device itself may serve as the control device, or an additional control device may also be provided, such that the control device is communicatively connected to at least one of the head-mounted display and the computing device.

Optionally, the computing device may be a terminal device with computing capabilities, such as a mobile phone, an electronic computer, an adapter, or a central control system of a movable platform. The movable platform includes but is not limited to vehicles, trains, ships, airplanes, etc. Taking a vehicle as an example, the central control system may be a vehicle infotainment system (the vehicle infotainment system refers to an in-vehicle infotainment product mounted in a center console of a vehicle). A rendering engine may be mounted in the computing device.

The computing device may be a single terminal device or a plurality of terminal devices. For example, two terminal devices may serve as computing devices and may be communicatively connected to the head-mounted display. The two terminal devices may include a first terminal device and a second terminal device, and the first terminal device and the second terminal device undertake part of the functions of the computing device according to actual requirements. For example, the first terminal device may be connected to the head-mounted display via the second terminal device. The first terminal device may be primarily configured to provide data carrying the display image and electric power to the head-mounted display. The first terminal device may also supply electric power to the second terminal device. The second terminal device may be configured to receive data collected by the sensors of the head-mounted display, calculate at least one of the position, attitude, or pose of the head-mounted display, and render images based on the above calculation results.

Optionally, the head-mounted display and the computing device may interact via a wired communication method or a wireless communication method. For example, the head-mounted display and the computing device may interact via Bluetooth, or the head-mounted display and the computing device may interact via a universal serial bus (USB) interface.

Of course, the head-mounted display may also be in the form of an all-in-one device, and the head-mounted display can simultaneously have capabilities including data collection, data processing, image rendering, and image display.

In some optional embodiments, the head-mounted display may collect data using its own sensors, such as collecting image data, acceleration data, angular velocity data, etc. By performing calculations using the data collected by the sensors, information such as the position, attitude, or pose of the head-mounted display can be determined. The determined information can be used to adjust the image displayed in the virtual space of the head-mounted display. Optionally, the data collected by the above sensors may be used to perform calculations for mitigating jittering of the head-mounted display, and the calculation results may be used to adjust the display images to show jitter-mitigated images.

In some optional embodiments, when the head-mounted display is used on a movable platform, the head-mounted display may be communicatively connected to the movable platform via an adapter, and the adapter serves as a medium for data transmission between the two. The central control system of the movable platform can provide data carrying the to-be-displayed images to the user, while the adapter may undertake at least one of the functions including image rendering and adjustment, and send the image to the head-mounted display for display. The central control system of the movable platform and the adapter jointly constitute the computing device.

In some optional embodiments, additional control identifiers may also be displayed through the head-mounted display. These control identifiers can facilitate interaction between the user and the image displayed in the virtual space.

Optionally, the control identifier may be a one-dimensional, two-dimensional, or three-dimensional identifier. The control identifier may be a dot, an arrow, a box, etc., or may also be an identifier with a certain length, such as a line segment, a curve, a long arrow, etc.

Exemplary method

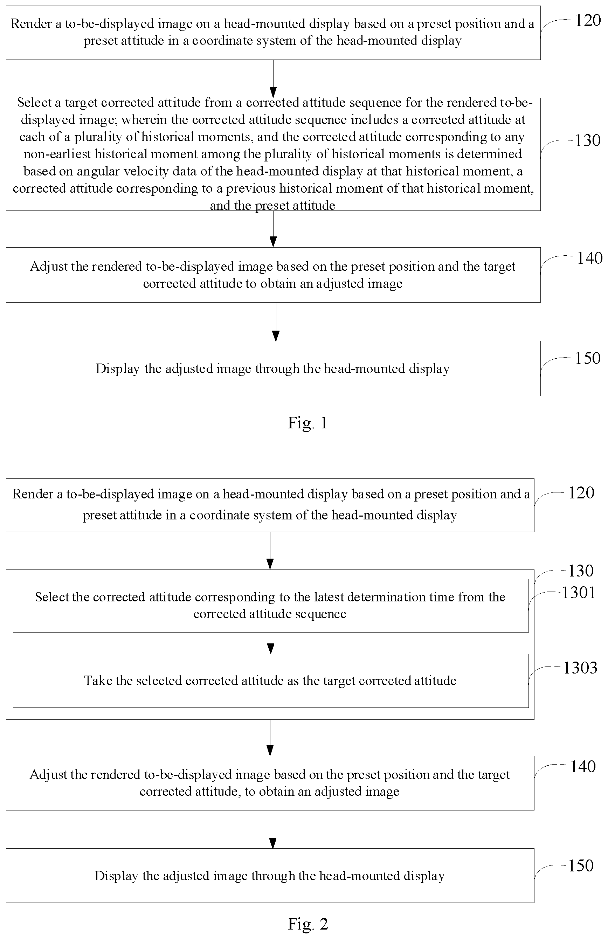

Fig. 1 is a flow diagram of a method for displaying an image on a head-mounted display provided in an exemplary embodiment of the present disclosure. The method shown in Fig. 1 can include step 120, step 130, step 140 and step 150, and details of each step are described respectively below.

Step 120: rendering a to-be-displayed image of a head-mounted display based on a preset position and a preset attitude in a coordinate system of the head-mounted display.

In some optional embodiments, the preset position may be a fixed position in the coordinate system of the head-mounted display. This fixed position may be a position conforming to the viewing habit of the user. For example, the fixed position may be a position directly in front of the head-mounted display or on the upper left of the head-mounted display that is easily observed by the user. In this way, the preset position can be considered as a position used for processing the display image to ensure the display effect of the head-mounted display.

In some optional embodiments, the preset attitude may be a fixed attitude in the coordinate system of the head-mounted display, and the fixed attitude may be an attitude conforming to the viewing habit of the user. For example, the fixed attitude may be an attitude that enables the display image in the virtual space of the head-mounted display to be perpendicular to the horizontal line of sight of the user. In this way, the preset attitude can be regarded as an attitude used for processing the display image to ensure the display effect of the head-mounted display.

In step 120, data carrying the image to be displayed by the head-mounted display (such as video data, application interface data, etc.) can be acquired. Optionally, if the acquired data is encoded data, the acquired data needs to be decoded first, and then a rendering engine uses the preset position and preset attitude to render the image based on the decoding result to obtain the rendered to-be-displayed image. Since the rendering operation herein refers to the preset position and preset attitude, if the rendered to-be-displayed image is directly displayed by the head-mounted display, the rendered to-be-displayed image will be located at the preset position and in the preset attitude in the coordinate system of the head-mounted display.

Step 130: selecting a target corrected attitude from a corrected attitude sequence for the rendered to-be-displayed image; wherein the corrected attitude sequence includes a corrected attitude at each of a plurality of historical moments, and a corrected attitude corresponding to any non-earliest historical moment among the plurality of historical moments is determined based on angular velocity data of the head-mounted display at that historical moment, a corrected attitude corresponding to a previous historical moment to that historical moment, and the preset attitude.

Generally, the head-mounted display may include an IMU (Inertial Measurement Unit) and an optical system. The IMU may include an accelerometer, a gyroscope, and a magnetometer. The accelerometer is configured to collect acceleration data, while the gyroscope is configured to collect angular velocity data. The optical system serves as an imaging system of the head-mounted display, and may include a display screen and optical elements.

In some optional embodiments, the angular velocity data of the head-mounted display at any moment may be angular velocity data collected by the gyroscope in the IMU at that moment.

In some optional embodiments, the corrected attitude can be determined at regular time intervals, then the corrected attitude can be determined for a plurality of times, thereby obtaining the corrected attitude sequence.

When the corrected attitude is determined for the first time without a corrected attitude corresponding to the previous historical moment, the corrected attitude corresponding to the previous historical moment may be the actual attitude of the head-mounted display, the preset attitude, or other preset attitudes. When the corrected attitude is not determined for the first time, the corrected attitude corresponding to the previous historical moment may be the corrected attitude determined last time.

In some optional embodiments, the corrected attitude sequence may include the corrected attitude determined each time the operation of determining the corrected attitude is performed. Alternatively, the corrected attitude sequence may include only the corrected attitudes determined from performing the operation of determining the corrected attitudes in the most recent preset number of times, and the corrected attitudes corresponding to earlier historical moments in the corrected attitude sequence may be deleted or overwritten. Optionally, the preset number may be 4, 5, 6, or other values, which are not enumerated one by one herein.

In step 130, the target corrected attitude may be selected from the corrected attitude sequence according to a specific selection rule. For example, the target corrected attitude may be selected from the corrected attitude sequence with reference to the sorting position of each corrected attitude in the corrected attitude sequence. For another example, the target corrected attitude may be selected from the corrected attitude sequence with reference to the sorting position of each corrected attitude in the corrected attitude sequence and the magnitude of difference between each corrected attitude in the corrected attitude sequence and the preset attitude.

Step 140: adjusting the rendered to-be-displayed image based on the preset position and the target corrected attitude, to obtain an adjusted image.

In step 140, when the rendered to-be-displayed image is adjusted, the adopted adjustment methods may include at least one of shifting and warping.

In some optional embodiments, the rendered to-be-displayed image may be divided into a plurality of image regions according to a preset division rule. Adjustment methods are respectively determined for the plurality of image regions, and the plurality of image regions are adjusted respectively according to their corresponding adjustment methods. The adjusted plurality of image regions may form an adjusted image.

In some optional examples, the preset division rule is used to evenly divide the rendered to-be-displayed image into two regions P1 and P2. If the adjustment method determined for region P1 is shifting, and the adjustment method determined for region P2 is warping, then the preset position and target corrected attitude can be used to shift region P1, and the preset position and target corrected attitude can be used to warp region P2. The shifted result of region P1 and the warped result of region P2 can form the adjusted image.

Of course, during specific implementation, the rendered to-be-displayed image may also not be divided into a plurality of image regions. Instead, the preset position and the target corrected attitude may be directly used to shift the entire rendered to-be-displayed image, and the shifted result serves as the adjusted image; or the preset position and the target corrected attitude may be directly used to warp the entire rendered to-be-displayed image, and the warped result serves as the adjusted image.

Step 150: displaying the adjusted image through the head-mounted display.

In step 150, a display screen in the optical system can be controlled to emit light of the adjusted image. Optical elements in the optical system can process the light emitted by the display screen, such that the light of the adjusted image is projected onto the eyes of the user using the head-mounted display. Therefore, the user can see the adjusted image, and the adjusted image is displayed by the head-mounted display.

The method for displaying an image on a head-mounted display provided in the embodiments of the present disclosure involves three stages: image rendering, image adjustment, and image display. In the image rendering stage, the to-be-displayed image of the head-mounted display can be rendered with reference to the preset position and the preset attitude in the coordinate system of the head-mounted display, thereby being beneficial for ensuring that the rendered to-be-displayed image conforms to the viewing habit of the user. In the image adjustment stage, the rendered to-be-displayed image can be adjusted with reference to the preset position and the target corrected attitude selected from the corrected attitude sequence for the rendered to-be-displayed image, so as to obtain an adjusted image. The preset position can be regarded as a position that enables the display effect of the head-mounted display to be adjusted towards the display effect at the preset position, and the target corrected attitude can be regarded as an attitude that enables the display effect of the head-mounted display to be adjusted towards the display effect at the preset attitude. In this way, with reference to the preset position and the target corrected attitude, the rendered to-be-displayed image is adjusted, thereby being beneficial to performing effective image stabilization optimization based on the rendered to-be-displayed image. In the image display stage, the adjusted image obtained after image stabilization optimization can be displayed by the head-mounted display. In this way, from the visual perspective of the user, the image displayed by the head-mounted display has better stability, thereby avoiding significant jitter caused by vibrations of the head-mounted display, and further enhancing the usage experience of the user.

In some optional examples, based on the embodiment shown in Fig. 1, as shown in Fig. 2, step 130 includes step 1301 and step 1303.

Step 1301: selecting the corrected attitude corresponding to the latest determination time from the corrected attitude sequence.

In some optional embodiments, when the corrected attitude is determined through a correction action each time, the determination time of the corrected attitude may be recorded, and the corrected attitudes in the corrected attitude sequence may be arranged in a chronological order from the earliest to the latest determination time, such that the corrected attitude at the end of the corrected attitude sequence is the corrected attitude with the latest determination time in the corrected attitude sequence.

Of course, the corrected attitudes in the corrected attitude sequence can also be arranged in a chronological order from the latest to the earliest determination time. In this way, the corrected attitude ranked first in the corrected attitude sequence is the corrected attitude with the latest corresponding determination time in the corrected attitude sequence.

Step 1303: taking the selected corrected attitude as the target corrected attitude.

In the embodiments of the present disclosure, with reference to the order of determination time corresponding to each corrected attitude in the corrected attitude sequence, the target corrected attitudes can be efficiently and reliably filtered out from the corrected attitude sequence.

Of course, the implementation manner of step 130 is not limited hereto. For example, the corrected attitude at the latest determination time and the corrected attitude at the second latest determination time may be selected from the corrected attitude sequence, and these two corrected attitudes may respectively serve as target corrected attitudes. In this way, suppose that the rendered to-be-displayed image is evenly divided into two regions P1 and P2 according to the preset division rule described above, the preset position and the corrected attitude at the latest determination time may be used to shift region P1, and the preset position and the corrected attitude at the second latest determination time may be used to warp region P2.

Of course, the number of target corrected attitudes is not limited to 1 or 2 as mentioned above, and can also be 3 or more, which will not be enumerated one by one herein.

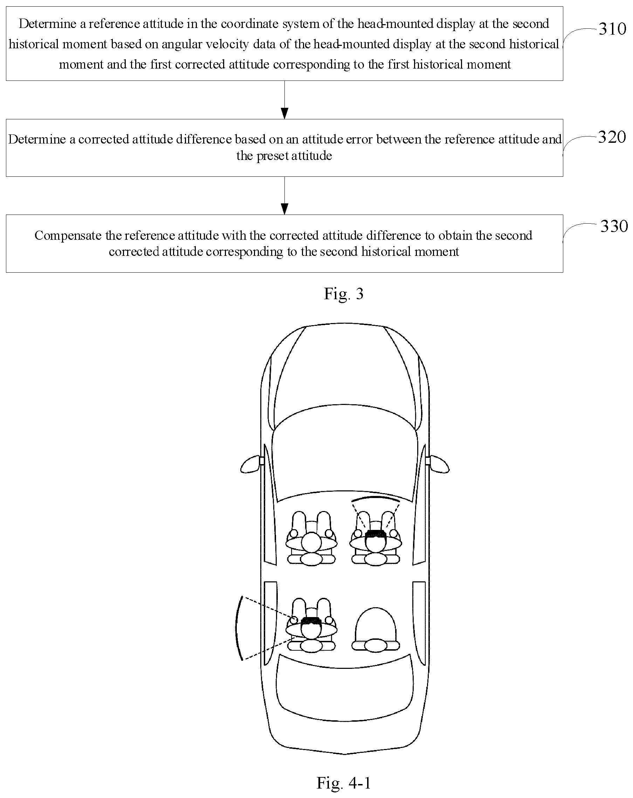

In some optional examples, if two adjacent corrected attitudes in the corrected attitude sequence are a first corrected attitude and a second corrected attitude, the historical moment corresponding to the first corrected attitude is represented by a first historical moment and the historical moment corresponding to the second corrected attitude is represented by a second historical moment (with the first historical moment earlier than the second historical moment), then for the method for determining the second corrected attitude, please refer to Fig. 3. As shown in Fig. 3, the method for determining the second corrected attitude may include step 310, step 320 and step 330.

Step 310: determining a reference attitude in the coordinate system of the head-mounted display at the second historical moment based on angular velocity data of the head-mounted display at the second historical moment and the first corrected attitude corresponding to the first historical moment.

In step 310, an integration method for angular position starting from gyroscope angular velocity can be used to perform integration processing on the angular velocity data of the head-mounted display at the second historical moment and the first corrected attitude, so as to obtain the reference attitude of the head-mounted display in the coordinate system at the second historical moment.

Suppose that the angular velocity data of the head-mounted display at the second historical moment is represented as $Gyro_k$, the first corrected attitude is represented as $Pose_{k-1}$, and the reference attitude is represented as $\tilde{Pose_k}$, then:

$$\tilde{Pose_k} = Pose_{k-1} \oplus Gyro_k$$

Step 320: determining a corrected attitude difference based on an attitude error between the reference attitude and the preset attitude.

In step 320, the difference between the reference attitude and the present attitude can be calculated, to obtain the attitude error between the reference attitude and the present attitude. The attitude error may be in a $3\times1$ axis-angle form. It is to be noted that the difference calculation here is not a simple subtraction, but a generalized function. The "difference" in the difference calculation refers to a difference. The difference calculation may mean a relative rotation between two angles. Suppose that the reference attitude is represented as $\tilde{Pose_k}$, the preset attitude is represented as *Target*, the attitude error is represented as *error*, then:

$$error = Target \ominus \tilde{Pose_k}$$

In some optional embodiments, after the attitude error is obtained, low pass filter processing can be performed on the attitude error to obtain a corrected attitude difference.

In some other optional embodiments, after the attitude error is obtained, the attitude error can be multiplied by a correction proportional coefficient, and the multiplication result is taken as the corrected attitude difference. Optionally, the correction proportional coefficient may be greater than 0 and less than 1, such as 0.2, 0.6, 0.6, 0.8, etc., which will not be enumerated one by one herein.

Step 330: compensating the reference attitude with the corrected attitude difference to obtain the second corrected attitude corresponding to the second historical moment.

In step 330, the reference attitude can be updated with the corrected attitude difference as a compensation value, so as to obtain the second corrected attitude corresponding to the second historical moment. The second corrected attitude is represented as $Pose_k$, then:

$$Pose_k = \tilde{Pose_k} \oplus error_1$$

It should be noted that the compensation value herein may represent a relative rotation. Updating the reference attitude with the compensation value may involve superimposing a relative attitude based on the reference attitude to obtain another attitude, namely the second corrected attitude.

In the embodiments of the present disclosure, using the angular velocity data of the head-mounted display at the second historical moment, and the first corrected attitude corresponding to the first historical moment, a reference attitude can be efficiently and reliably obtained through an integral operation, and then, through calculating a difference between the reference attitude and the attitude error, and through an attitude compensation processing, the second corrected attitude can be efficiently and reliably determined, thereby efficiently and reliably generating a corrected attitude sequence. When the corrected attitude in the corrected attitude sequence is used in the image adjustment stage, it is beneficial to adjusting the display effect of the head-mounted display towards the display effect in the preset attitude. No matter whether small angular changes occur in the use of the head-mounted display (such as bumps, shaking, jittering, etc.), or large angular changes occur in the use of the head-mounted display (such as large angular turns), it is possible to ensure image stability of the head-mounted display, thereby further improving the usage experience of the user.

In some optional examples, the head-mounted display is located on a movable platform, and the head-mounted display satisfies one of the following two conditions: the head-mounted display is fixedly mounted on the movable platform; and the head-mounted display can move relative to the movable platform.

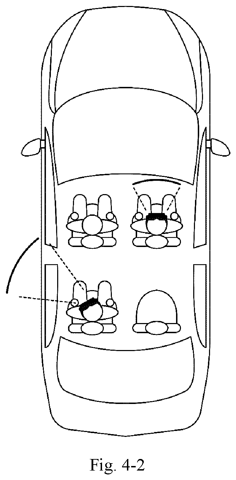

Herein, the movable platform includes but is not limited to vehicles, ships, trains, airplanes, etc. For example, the movable platform can be the automobile shown in Fig. 4-1 and Fig. 4-2.

In some optional embodiments, the head-mounted display can be mounted at a fixed position inside the movable platform through bolted connection, clamping connection, or other fixed connection methods well known to those skilled in the art. At this time, the head-mounted display and the movable platform are relatively stationary, and the head-mounted display can move synchronously with the movable platform.

In some other optional embodiments, the head-mounted display may not be fixedly connected with the movable platform. When the user (such as a passenger in a vehicle) wears the head-mounted display, the user can move randomly within the movable platform. Since the head-mounted display can be essentially stationary with respect to the user, the head-mounted display will follow the user to move randomly within the movable platform.

In the embodiments of the present disclosure, the head-mounted display can be fixedly mounted on the movable platform, thereby being conducive to preventing the head-mounted display from being bumped or lost. Of course, the head-mounted display can also move relative to the movable platform. In this way, the user can use the head-mounted display at any desired position within the movable platform according to actual situations.

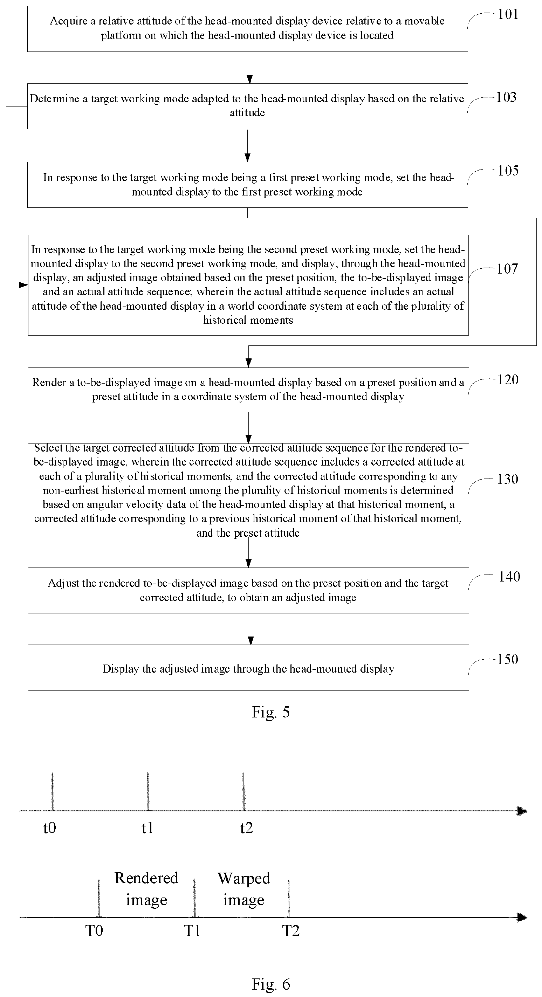

In some optional examples, based on the embodiment shown in Fig. 1, as shown in Fig. 5, the method further includes step 101, step 103, step 105 and step 107.

Step 101: acquiring a relative attitude of the head-mounted display relative to a movable platform on which the head-mounted display is located.

In some optional embodiments, both the head-mounted display and the movable platform may include an IMU. By performing integration processing on the data collected by the IMU in the head-mounted display, the actual attitude of the head-mounted display in the world coordinate system can be determined. By performing integration processing on the data collected by the IMU in the movable platform, the actual attitude of the movable platform in the world coordinate system can be determined. The relative attitude of the head-mounted display relative to the movable platform can be obtained by calculating the difference between the actual attitude of the head-mounted display and the actual attitude of the mobile device in the world coordinate system.

In some optional embodiments, the movable platform can be provided with a camera, and a marker can be arranged on either the movable platform or the head-mounted display. The camera can acquire images of the marker, and the relative attitude of the head-mounted display relative to the movable platform can be calibrated by using an image calibration algorithm based on the images obtained through image acquisition.

Step 103: determining a target working mode adapted to the head-mounted display based on the relative attitude.

It should be noted that, for the head-mounted display, there are three modes that can be used when contents are presented, namely, the first preset working mode, the second preset working mode, and the third preset working mode.

The second preset working mode may be a 3-dof (degree of freedom) mode. In the second preset working mode, the actual attitude of the head-mounted display itself can be used for locating the display image. At this time, the attitude of the display image of the head-mounted display is related to the actual attitude of the user. The display image of the head-mounted display may rotate relative to the coordinate system of the head-mounted display, and the display image of the head-mounted display may remain rotationally unchanged relative to the world coordinate system.

The third preset working mode may be a 0-dof mode. In the third preset working mode, the display image of the head-mounted display is not located. At this time, the attitude of the display image of the head-mounted display is independent of the attitude of the user, and the display image of the head-mounted display moves with the movement of the head of the user. The display image of the head-mounted display remains rotationally unchanged relative to the coordinate system of the head-mounted display, but may rotate relative to the world coordinate system.

The first preset working mode implemented in the embodiments of the present disclosure can be a mode different from the 0-dof mode and the 3-dof mode. In the first preset working mode, the head-mounted display can use the corrected attitude in the corrected attitude sequence to locate the display image. At this time, the attitude of the display image of the head-mounted display is related to the corrected attitude.

In this way, there are three possible cases for the target working mode, namely, the first preset working mode, the second preset working mode, and the third preset working mode.

Step 105: in response to the target working mode being the first preset working mode, setting the head-mounted display to the first preset working mode, and triggering the above step 120 to step 150.

If the target working mode is the first preset working mode, whether the working mode currently used by the head-mounted display is the first preset working mode can be judged, if the judgment result is yes, the head-mounted display can maintain the currently used working mode, and if the judgment result is no, the working mode currently used by the head-mounted display can be switched to the first preset working mode.

In the first preset working mode, the above step 120 to step 150 can be performed, such that the head-mounted display presents a stable image to the user.

In some optional examples, in the first preset working mode, the corrected attitude can be determined at regular time intervals. In this way, at three moments t0, t1, and t2 in Fig. 6 (these three moments can each serve as a historical moment), a corrected attitude can be respectively determined to obtain three corrected attitudes, and these three corrected attitudes can be included in the corrected attitude sequence.

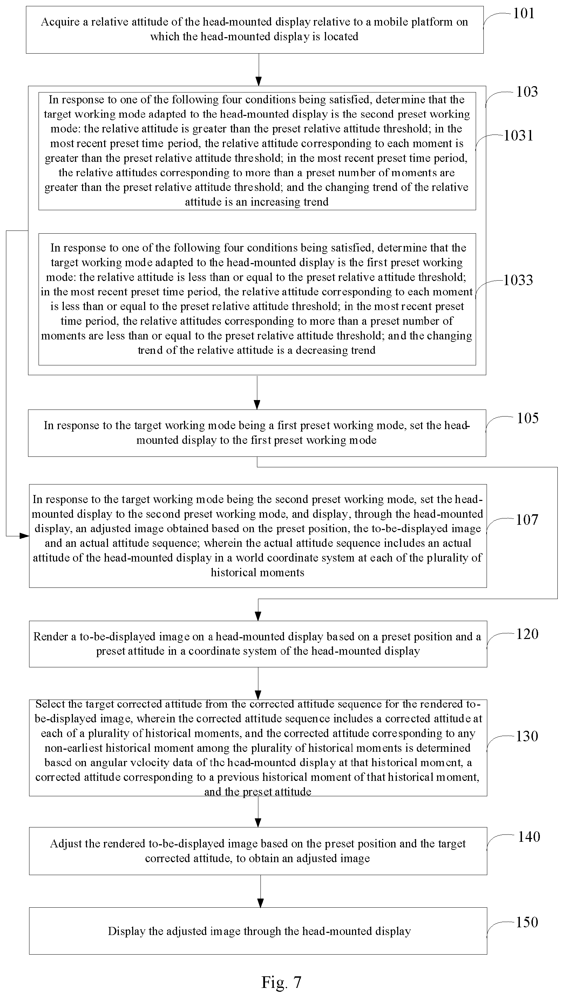

In addition, in the first preset working mode, between moment T0 and moment T1 in Fig. 6, the to-be-displayed image can be rendered using the preset position and the preset attitude. At moment T1 in Fig. 7, the corrected attitude corresponding to the latest determination time can be obtained from the corrected attitude sequence, such that the corrected attitude corresponding to moment t2 can be obtained. Between moment T1 and moment T2 in Fig. 6, the preset position and the corrected attitude corresponding to the moment t2 can be used to adjust (for example, warp) the rendered to-be-displayed image to obtain an adjusted image, and subsequently, the obtained adjusted image can be displayed through the head-mounted display.

Step 107: in response to the target working mode being the second preset working mode, setting the head-mounted display to the second preset working mode, and displaying, through the head-mounted display, an adjusted image obtained based on the preset position, the to-be-displayed image and an actual attitude sequence; wherein the actual attitude sequence includes an actual attitude of the head-mounted display in a world coordinate system at each of the plurality of historical moments.

If the target working mode is the second preset working mode, whether the working mode currently used by the head-mounted display is the second preset working mode can be judged, if the judgment result is yes, the head-mounted display can maintain the currently used working mode, and if the judgment result is no, the working mode currently used by the head-mounted display can be switched to the second preset working mode.

In the second preset working mode, the adjusted image obtained based on the preset position, the to-be-displayed image and the actual attitude sequence can be displayed through the head-mounted display.

In some optional examples, in the second preset working mode, the actual attitude can be determined at regular time intervals using data collected by the IMU included in the head-mounted display. In this way, at three moments t0, t1, and t2 in Fig. 6 (these three moments can each serve as a historical moment), an actual attitude can be respectively determined to obtain three actual attitudes, and these three actual attitudes can be included in the actual attitude sequence.

In addition, in the second preset working mode, between moment T0 and moment T1 in Fig. 6, the to-be-displayed image can be rendered using the preset position and the actual attitude corresponding to moment t1. Between moment T1 and moment T2 in Fig. 6, the preset position and the actual attitude corresponding to the moment t2 can be used to adjust (for example, warp) the rendered to-be-displayed image to obtain the adjusted image, and subsequently, the obtained adjusted image can be displayed through the head-mounted display.

In the embodiments of the present disclosure, with reference to the relative attitude of the head-mounted display relative to a movable platform on which the head-mounted display is located, the target working mode adapted to the head-mounted display can be reasonably determined, so as to control the head-mounted display to operate in an appropriate working mode. When the target working mode is the first preset working mode or the second preset working mode, the display image can be positioned based on the attitude (actual attitude or corrected attitude), thereby being conducive to ensuring the image stability of the head-mounted display, and improving the usage experience of the user.

In some optional examples, based on the embodiment shown in Fig. 5, as shown in Fig. 7, step 103 includes step 1031 and step 1033.

Step 1031: in response to one of the following four conditions being satisfied, determining that the target working mode adapted to the head-mounted display is the second preset working mode: the relative attitude is greater than the preset relative attitude threshold; in the most recent preset time period, the relative attitude corresponding to each moment is greater than the preset relative attitude threshold; in the most recent preset time period, the relative attitudes corresponding to more than a preset number of moments are greater than the preset relative attitude threshold; and the changing trend of the relative attitude is an increasing trend.

Optionally, the recent preset time period may be the recent 10 seconds, 20 seconds, 30 seconds, etc., and the preset number may be 3, 5, 8, 10, or other values, which are not enumerated one by one herein.

In some optional embodiments, relative attitudes can be calculated at regular time intervals to obtain relative attitudes corresponding to a plurality of moments, and the relative attitudes corresponding to the plurality of moments are compared with the preset relative attitude threshold. Additionally, the relative attitude sequence including the relative attitudes corresponding to the plurality of moments can be analyzed to determine the changing trend of the relative attitudes.

If any relative attitude exceeds a preset relative attitude threshold, it can be determined that the attitude of the head-mounted display relative to the movable platform changes significantly within a short time period. In this case, the user probably has a need to turn his head to observe the real external world. Therefore, in this case, the head-mounted display can be set to the 3-dof mode to satisfy the requirement of the user to observe the real external world.

In addition, in three cases in which the relative attitude corresponding to each moment in the most recent preset time period is greater than a preset relative attitude threshold, the relative attitudes corresponding to more than a preset number of moments are greater than the preset relative attitude threshold, and the changing trend of the relative attitude is an increasing trend, the user probably has a need to turn his head to observe the real external world. Therefore, in these cases, the head-mounted display can also be set to the 3-dof mode.

It should be noted that for the case in which the changing trend of the relative attitude is an increasing trend, it is not required that the relative attitude in the relative attitude sequence continuously increases, as long as the relative attitude in the relative attitude sequence is gradually increasing from an overall perspective.

Step 1033: in response to one of the following four conditions being satisfied, determining that the target working mode adapted to the head-mounted display is the first preset working mode: the relative attitude is less than or equal to the preset relative attitude threshold; in the most recent preset time period, the relative attitude corresponding to each moment is less than or equal to the preset relative attitude threshold; in the most recent preset time period, the relative attitudes corresponding to more than a preset number of moments are less than or equal to the preset relative attitude threshold; and the changing trend of the relative attitude is a decreasing trend.

It should be noted that the four conditions involved in step 1033 are just opposite to the four conditions involved in step 1031. If one of the four conditions in step 1033 is satisfied, it can be determined that the attitude of the head-mounted display relative to the movable platform is relatively small within a short time period, and the attitude of the user relative to the movable platform is stable. In this case, it can be determined that the user does not have the need to turn his head to observe the real external world. Therefore, in this case, the head-mounted display can be set to the first preset working mode.

In the embodiments of the present disclosure, the relative attitude can be used as a reference to judge whether the user has a need to turn his head to observe the real external world. If the judgment result indicates that such a need exists (e.g., the situation in Fig. 4-1 in which a passenger on the left side of the back row turns his head from facing the left window to the front), the head-mounted display can be set to the second preset working mode to satisfy the actual demands of the user. Conversely, when the judgment result indicates no such need (e.g., the situation in which the passenger on the right side of the front row in Fig. 4-2 consistently faces forwards, or the passenger on the left side in the back row in Fig. 4-2 slowly turns his head from facing the left window to the front), the head-mounted display can be set to the first preset working mode, so as to achieve an image stabilization effect and ensure that the image follows the user.

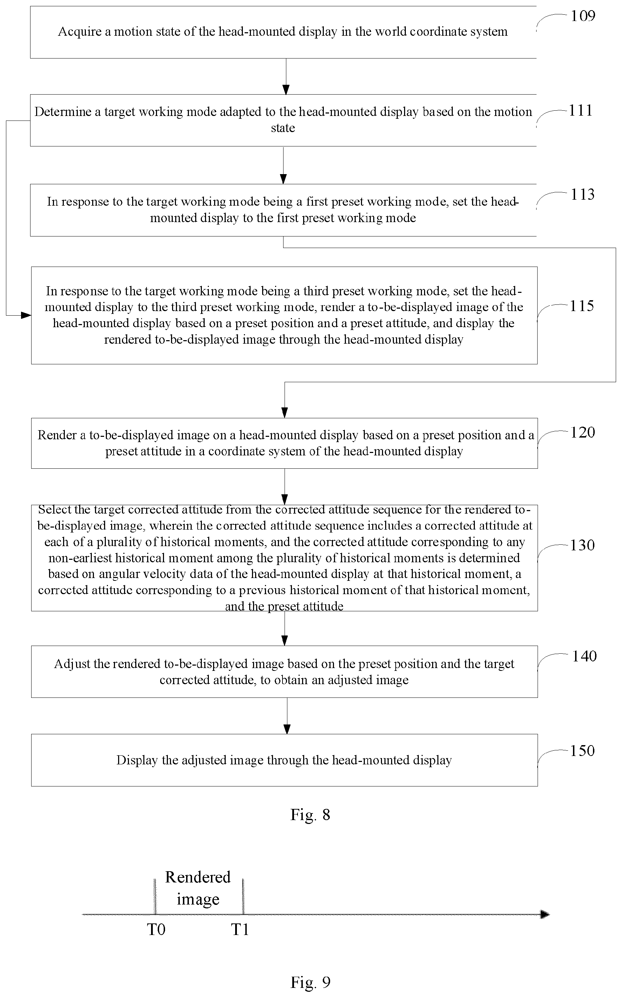

In some optional examples, based on the embodiment shown in Fig. 1, as shown in Fig. 8, the method further includes step 109, step 111, step 113 and step 115.

Step 109: acquiring a motion state of the head-mounted display in the world coordinate system.

In some optional embodiments, the motion state of the head-mounted display in the world coordinate system includes but is not limited to a stationary state, a uniform linear motion state, an accelerated motion state, a decelerated motion state, etc. The accelerated motion state can also be further divided into a uniformly accelerated motion state and a variable accelerated motion state, and the decelerated motion state can also be further divided into a uniformly decelerated motion state and a variable decelerated motion state, and so on.

In step 109, data collected by sensors such as the IMU included in the head-mounted display can be obtained. By using the acquired data, information such as the acceleration, velocity, and actual attitude of the head-mounted display in the world coordinate system at each moment can be calculated. With the information, the motion state of the head-mounted display in the world coordinate system can be determined. For example, if both velocity and acceleration of the head-mounted display remain basically zero during the recent time period, the motion state can be determined as a stationary state. For another example, if the velocity of the head-mounted display remains basically a fixed value significantly greater than 0 during the recent time period, the acceleration of the head-mounted display remains basically zero, and the actual attitude of the head-mounted display remains basically unchanged, then the motion state can be determined as a uniform linear motion state. By using the acceleration of the head-mounted display in the world coordinate system at each moment, the change in the acceleration of the head-mounted display can be determined. With reference to the change in the acceleration, the motion state can be determined as an accelerated motion state or a decelerated motion state.

Step 111: determining a target working mode adapted to the head-mounted display based on the motion state.

It should be noted that, with reference to the relevant description in step 103, there are three possible cases for the target working mode, namely, the first preset working mode, the second preset working mode, and the third preset working mode.

Step 113: in response to the target working mode being the first preset working mode, setting the head-mounted display to the first preset working mode, and triggering step 120 to step 150.

It should be noted that for the specific implementation manner of step 113, please refer to the introduction of step 105, and details will not be elaborated herein.

Step 115: in response to the target working mode being the third preset working mode, setting the head-mounted display to the third preset working mode, rendering the to-be-displayed image based on the preset position and the preset attitude, and displaying the rendered to-be-displayed image through the head-mounted display.

If the target working mode is the third preset working mode, whether the working mode currently used by the head-mounted display is the third preset working mode can be judged, if the judgment result is yes, the head-mounted display can maintain the currently used working mode, and if the judgment result is no, the working mode currently used by the head-mounted display can be switched to the third preset working mode.

In some optional examples, in the third preset working mode, during moment T0 to moment T1 in Fig. 9, a rendering engine can use the preset position and the preset attitude to render the to-be-displayed image, and after the rendering is completed, the obtained adjusted image can be directly displayed through the head-mounted display.

In the embodiments of the present disclosure, with reference to the motion state of the head-mounted display in the world coordinate system, the target working mode adapted to the head-mounted display can be reasonably determined, so as to control the head-mounted display to operate in an appropriate working mode. When the target working mode is the first preset working mode, the display image can be located based on the corrected attitude, thereby being conducive to ensuring the image stability of the head-mounted display, and improving the usage experience of the user. When the target working mode is the third preset working mode, the result obtained by rendering the to-be-displayed image based on the preset position and the preset attitude can be directly displayed through the head-mounted display without additional image adjustment, thereby being conducive to saving computing power.

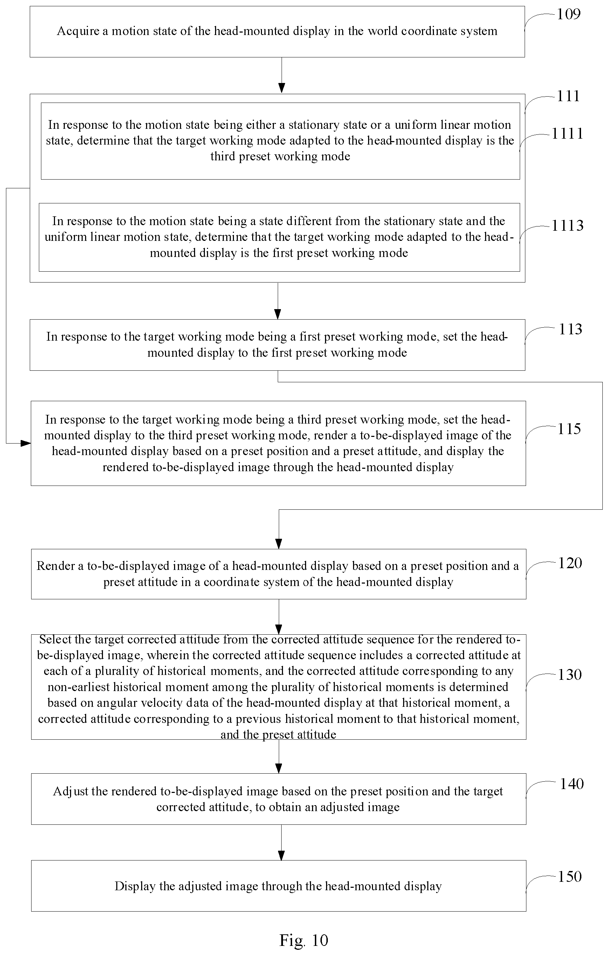

In some optional examples, based on the embodiment shown in Fig. 8, as shown in Fig. 10, step 111 includes step 1111 and step 1113.

Step 1111: in response to the motion state being either a stationary state or a uniform linear motion state, determining that the target working mode adapted to the head-mounted display is the third preset working mode.

Step 1113: in response to the motion state being a state different from the stationary state and the uniform linear motion state, determining that the target working mode adapted to the head-mounted display is the first preset working mode.

In the embodiments of the present disclosure, if the motion state is either a stationary state or a uniform linear motion state, it can be considered that the head-mounted display is stationary or the operation of the head-mounted display is very stable. In this way, the head-mounted display can be set to the third preset working mode, to effectively save computing resources and computing power. If the motion state is a state different from the stationary state and the uniform linear motion state, it can be considered that the operation of the head-mounted display is not stable enough, then the head-mounted display can be set to the first preset working mode, and the image stability of the head-mounted display can be ensured.

In some optional examples, the effect of the first preset working mode may be verified in a scenario in which a vehicle goes uphill, a scenario in which the vehicle is travelling normally with an object protruding from the road surface making the vehicle bump, and a scenario in which the vehicle is turning, respectively.

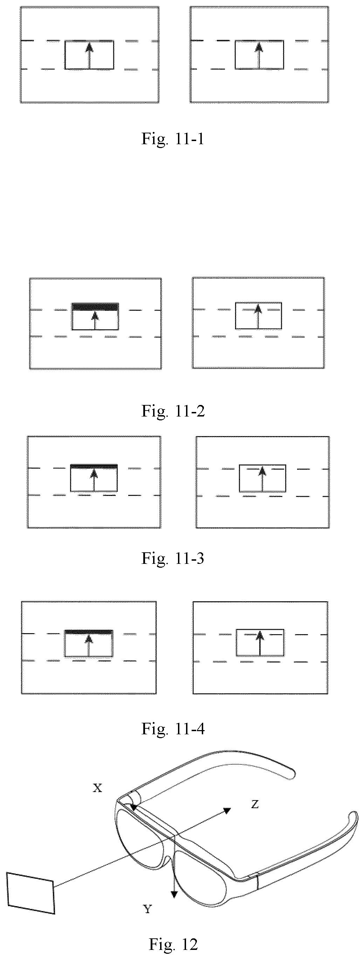

In a scenario in which the vehicle goes uphill, for the comparison results of the display effects of the head-mounted display in the first preset working mode and the 0-dof mode, please refer to Figs. 11-1 to 11-4. Each figure shows the comparison of the two working modes under the same state of the head-mounted display. In Figs. 11-1 to 11-4, it can be defined that a peripheral solid line box and a dotted line within the peripheral solid line box remain unchanged relative to the world coordinate system. The small solid line box within the peripheral solid line box represents a screen visible to the user through the head-mounted display, and in Figs. 11-1 to 11-4, it can be understood that the small solid line box changes along with the head-mounted display relative to the world coordinate system. In each of Figs. 11-1 to 11-4, the left portion represents the display effect of the head-mounted display in the first preset working mode, while the right portion represents the display effect of the head-mounted display in the 0-dof mode.

In the scenario in which the vehicle goes uphill, for the first preset working mode, the vehicle first travels smoothly (assumed to be travelling on a flat and straight road), the overall image is displayed over the entire display area of the screen, and the display area is located in the portion defined by the dotted line in the peripheral solid line box. The position of the display area that can be observed through the head-mounted display is a preset position, and the preset position can be located in a negative direction of a Z axis in the coordinate system of the head-mounted display shown in Fig. 12, and the display area can be parallel to an XY plane formed by the X axis and the Y axis in the coordinate system of the head-mounted display shown in Fig. 12. At this time, the overall image is displayed in its entirety, and the dimension of the displayable image that can be viewed by the user is basically identical to the dimension of the display area, as shown in the left portion of Fig. 11-1.

When the vehicle begins to move upwards, since time is required to calculate the corrected attitude, the display area of the screen is first shifted upwards by a portion relative to the portion defined by the dotted line in the peripheral solid line box, and the overall image is shifted to the lower portion of the display area through the adjusted image. The effect of the image in the display area is shown in the left portion of Fig. 11-2. Compared with the left portion of Fig. 11-1, a portion of the display area does not display contents, and this portion may be black, such that the dimension of the displayable image that is visible to the user is different from the dimension of the display area.

When the vehicle continues to move upwards, the attitude can be continuously corrected and the image can be adjusted, the display area is shifted downwards with respect to the left portion of Fig. 11-2 to progressively converge to the portion defined by the dotted line in the peripheral solid line box. The overall image will be shifted upwards by a portion relative to the left portion of Fig. 11-2 to gradually tend to fill the display area, but at this time, the dimension of the displayable image that is visible to the user still does not correspond to the dimension of the display area. The effect of the image in the display area can be shown in the left portion of Fig. 11-3.

When the vehicle continues to move upwards, if the slope is relatively gentle, the display area and the displayable image visible to the user tend to be stable by continuously correcting the attitude and adjusting the image, and the display effect of the image in the display area is as shown in the left portion of Fig. 11-4.

When the vehicle finishes going uphill and does not continue to move upwards and maintains a stable state, it is possible to achieve the effect of the overall image in the display area shown in the left portion of Fig. 11-1.

In the scenario in which the vehicle goes uphill, for the 0-dof mode, as shown by the right portion in Figs. 11-1 to 11-4, the dimension of the constantly displayed image is the same as the dimension of the display area, that is, regardless of how the user wearing the head-mounted display moves, the overall image remains at a preset position and in a preset attitude in the coordinate system of the head-mounted display. However, in the world coordinate system, the overall image is continuously moving. Only an ideal scenario of a gentle slope is shown in the figures. It can be understood that the slopes of actual roads are multi-dimensional. The method of the embodiments of the present disclosure can be used to correct the attitude along three axes and adjust the image, such that the image can relatively maintain a stable pose within a small range in the world coordinate system. With reference to Figs. 11-1 to 11-4, it can be known that in the scenario in which the vehicle goes uphill, compared with the 0-dof mode, the image can move upwards slowly in the first preset working mode, thereby achieving a better effect of image stabilization effect and preventing dizziness.

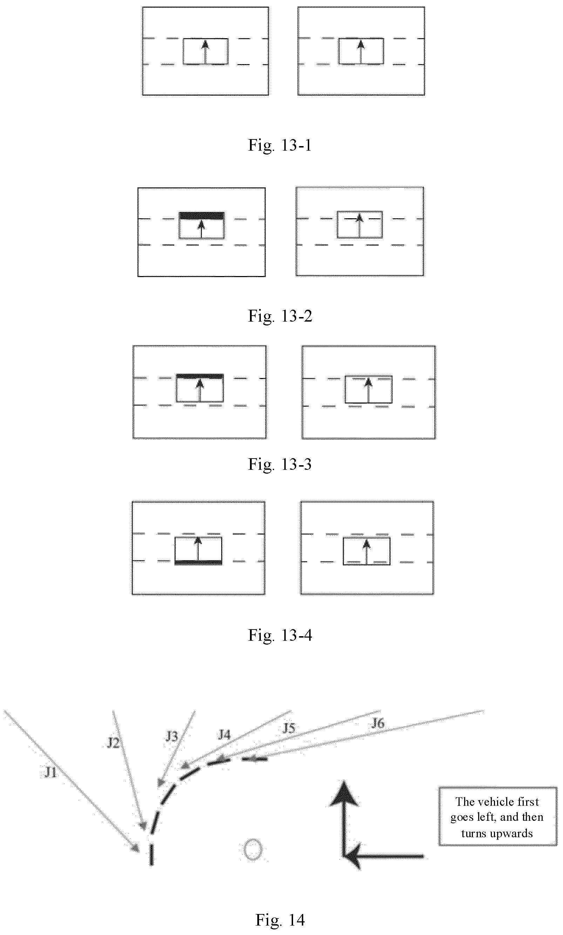

For the comparison results of the display effects of the head-mounted display in the first preset working mode and the 0-dof mode in the scenario in which the vehicle is travelling normally with an object protruding from the road surface making the vehicle bump, please refer to Figs. 13-1 to 13-4, and each figure represents the comparison of the two working modes in the same state of the head-mounted display. In Figs. 13-1 to 13-4, it can be defined that the peripheral solid line box and the dotted line in the peripheral solid line box are unchanged relative to the world coordinate system, and the small solid line box in the peripheral solid line box represents the screen visible to the user through the head-mounted display. In Figs. 13-1 to 13-4, it can be understood that the small solid line box can be changed along with the head-mounted display relative to the world coordinate system. In each of Figs. 13-1 to 13-4, the left portion represents the display effect of the head-mounted display in the first preset working mode, and the right portion represents the display effect of the head-mounted display in the 0-dof mode.

In a scenario in which the vehicle is travelling normally with an object protruding from the road surface making the vehicle bump, for the first preset working mode, the vehicle first travels smoothly, the overall image is displayed over the entire display area of the screen, and the display area is located in the portion defined by the dotted line in the peripheral solid line box, as shown in the left portion of Fig. 13-1.

If the object protruding from the road surface is relatively large and has a gentle slope, such as a speed bump, then the vehicle goes up first, at this time, similar to the explanation in Fig. 11-2, when compared with the left portion of Fig. 13-1, the overall image can achieve the effect as shown in the left portion of Fig. 13-2 by correcting the attitude and adjusting the image. When the top of the protruding object is reached, by continuously correcting the attitude and adjusting the image, the display area gradually approaches the portion defined by the dotted line in the peripheral solid line box, and the display image visible to the user gradually tends to fill the entire display area, and the display effect is as shown in the left portion of Fig. 13-3. When the vehicle leaves the protruding object and lands on the ground, which is equivalent to the vehicle going downhill, then the display effect will be opposite to that of Fig. 13-2, and the display area will move downwards by a portion relative to the portion defined by the dotted line in the peripheral solid line box, and the image will move towards the upper portion of the display area. The overall image is shown in the left portion of Fig. 13-4. Since the preceding display area is located above the portion defined by the dotted line in the peripheral solid line box, the display area in the left portion of Fig. 13-4 does not move downwards to a large extent. The vehicle then falls to the ground and continues to travel smoothly, and the overall image returns to what is shown in the left portion of Fig. 13-1.

If the object protruding from the road surface is relatively small and steep, the vehicle suddenly moves upwards, then the overall image is as shown in the left portion of Fig. 13-3, afterwards, the vehicle suddenly falls to the ground, and the overall image directly returns to what is shown in the left portion of Fig. 13-1.

For the 0-dof mode, the image will always be displayed in the display area of the screen, and the screen that is visible to the head-mounted display will also move along with the movement of the head-mounted display. In the scenario in which the vehicle is travelling normally and there is an object protruding from the road surface that makes the vehicle bump, the display image visible to the user will also bump up and down as the head-mounted display bumps up and down along with the vehicle, such as the effect displayed as shown in the right portion of Figs. 13-1 to 13-4.

With reference to Figs. 13-1 to 13-4, it can be seen that in the scenario in which the vehicle is travelling normally and there is an object protruding from the road surface that makes the vehicle bump, the first preset working mode can achieve a better image-stabilization effect compared to the 0-dof mode.

In the scenario in which the vehicle turns, as shown in Fig. 14, the vehicle may first move to the left side of the figure and then turn to the upper side of the figure, and for the comparison results of the display effects of the head-mounted display in the first preset working mode and the 3-dof mode in the scenario, please refer to Figs.

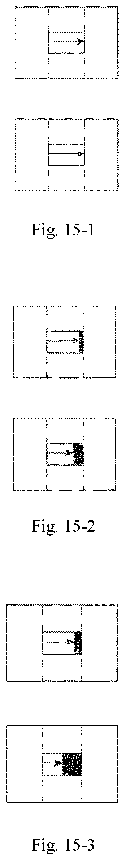

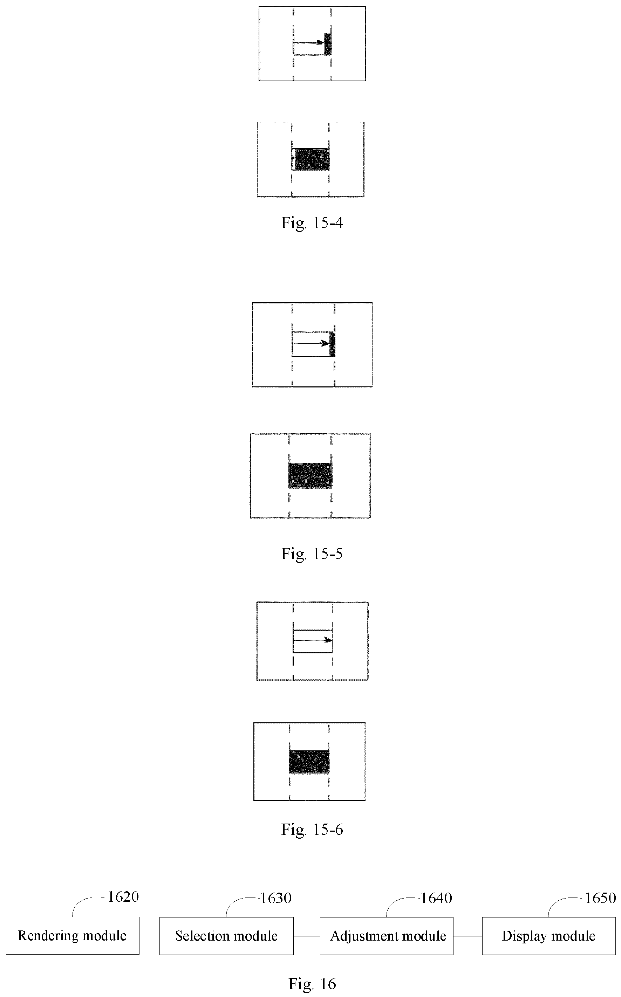

15-1 to 15-6. An ellipse in Fig. 14 may represent a position where the head of the user is located. It will be appreciated that, for ease of illustration, in the example shown in Fig. 14, the user does not actively turn his head, the line of sight of the user is always directed towards the moving direction of the vehicle, and the vehicle turns to drive the head of the user to turn relative to the world coordinate system. The "horizontal lines" indicated by the arrows in Fig. 14 represent a portion of the area at the center of the field of view at a certain distance from the user, and the area changes progressively from J1 to J6 as the vehicle turns. For Figs. 15-1 to 15-6, the arrow J1 in Fig. 14 represents the position of the area defined by the dotted line in Fig. 15-1, the arrow J2 in Fig. 14 represents the position of the area defined by the dotted line in Fig. 15-2, the arrow J3 in Fig. 14 represents the position of the area defined by the dotted line in Fig. 15-3, the arrow J4 in Fig. 14 represents the position of the area defined by the dotted line in Fig. 15-4, the arrow J5 in Fig. 14 represents the position of the area defined by the dotted line in Fig. 15-5, and the arrow J6 in Fig. 14 represents the position of the area defined by the dotted line in Fig. 15-6. In Figs. 15-1 to 15-6, it can be defined that the peripheral solid line box, the dotted line in the peripheral solid line box, and the small solid line box in the peripheral solid line box all change along with the head-mounted display relative to the world coordinate system. Each of Figs. 15-1 to 15-6 represents the comparison of two working modes in the same state of the head-mounted display, and the upper portion represents the display effect of the head-mounted display in the first preset working mode, and the lower portion represents the display effect of the head-mounted display in the 3-dof mode.

With reference to the upper portion of Figs. 15-1 to 15-6, it can be known that in the first preset working mode, after image processing, the image can slowly follow the user. For the explanation of this effect, please refer to the explanation of the process in which the vehicle goes uphill mentioned above. The main difference between this example and the above example lies in that the vehicle rotates around different axes in the world coordinate system. When the vehicle stops turning, the overall image will slowly return to the normal display area, and the image remains visible at this time. In the 3-dof mode, with reference to the lower portion of Figs. 15-1 to 15-6, it can be known that since the rotation of the image relative to the world is a fixed value, the image is no longer visible after turning.

With reference to Figs. 15-1 to 15-6, it can be known that when the vehicle turns, compared with the 3-dof mode, the first preset working mode is adopted, thereby being beneficial to maintaining the visibility of the image.

In summary, the first preset working mode provided in the embodiments of the present disclosure has good display effects in various scenarios, and the usage experience of the user can be better ensured.

Any method for displaying an image on a head-mounted display provided in embodiments of the present disclosure may be executed by any suitable device having data processing capabilities, including, but not limited to a terminal device and a server, etc. Alternatively, any method for displaying an image on a head-mounted display provided in embodiments of the present disclosure may be executed by a processor. For example, the processor executes any method for displaying an image on a head-mounted display mentioned in embodiments of the present disclosure, by calling corresponding instructions stored in a memory. This will not be described here.

Embodiments of the present disclosure provide an image processing method. The method includes: rendering a to-be-displayed image based on a preset position and a preset attitude in a coordinate system of the head-mounted display; acquiring a target corrected attitude, wherein the target corrected attitude is determined based on angular velocity data of the head-mounted display, a previous corrected attitude, and the preset attitude; and adjusting the rendered to-be-displayed image based on the preset position and the target corrected attitude.

In an example, the acquiring the target corrected attitude can be selecting a target corrected attitude from the corrected attitude sequence.

In an example, the corrected attitude sequence may include the corrected attitude at each of a plurality of historical moments; and the corrected attitude corresponding to any non-earliest historical moment among the plurality of historical moments is determined based on angular velocity data of the head-mounted display at that historical moment, the corrected attitude corresponding to the previous historical moment to that historical moment, and the preset attitude.

Embodiments of the present disclosure provide an image processing method for a head-mounted display. The method includes: in response to the target working mode of the head-mounted display being a first preset working mode, rendering the to-be-displayed image based on a preset position and preset attitude in a coordinate system of a head-mounted display; acquiring a target corrected attitude, wherein the target corrected attitude is determined based on angular velocity data of the head-mounted display, a previous corrected attitude, and the preset attitude; and adjusting the rendered to-be-displayed image based on the preset position and the target corrected attitude; and in response to the target working mode of the head-mounted display being a second preset working mode, adjusting the to-be-displayed image based on the preset position and the actual attitude of the head-mounted display in the world coordinate system.

The method may further include: in response to the target working mode of the head-mounted display being the third preset working mode, rendering a to-be-displayed image based on the preset position and the preset attitude in the coordinate system of the head-mounted display, and displaying the rendered to-be-displayed image through the head-mounted display.

Embodiments of the present disclosure provide a method for displaying an image on a head-mounted display, including: in response to a target working mode of the head-mounted display being the first preset working mode, displaying, through the head-mounted display, an image that slowly follows the coordinate system of the head-mounted display; and in response to the target working mode of the head-mounted display being the second preset working mode, displaying, through the head-mounted display, an image that rotates relative to the coordinate system of the head-mounted display and keeps rotational invariance relative to the world coordinate system.

The method may further include: in response to the target working mode of the head-mounted display being the third preset working mode, displaying, through the head-mounted display, an image that keeps constant rotation relative to the coordinate system of the head-mounted display and rotates relative to the world coordinate system.

Exemplary apparatus

Fig. 16 is a structural schematic diagram of an apparatus for displaying an image on a head-mounted display provided in an exemplary embodiment of the present disclosure. The apparatus shown in Fig. 16 includes a rendering module 1620, a selection module 1630, an adjustment module 1640 and a display module 1650.

The rendering module 1620 is configured to render a to-be-displayed image of a head-mounted display based on a preset position and a preset attitude in a coordinate system of the head-mounted display.

The selection module 1630 is configured to select a target corrected attitude from a corrected attitude sequence for the rendered to-be-displayed image; wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, the corrected attitude corresponding to the previous historical moment to that historical moment, and the preset attitude.

The adjustment module 1640 is configured to adjust the rendered to-be-displayed image based on the preset position and the target corrected attitude to obtain an adjusted image.

The display module 1650 is configured to display the adjusted image through the head-mounted display.

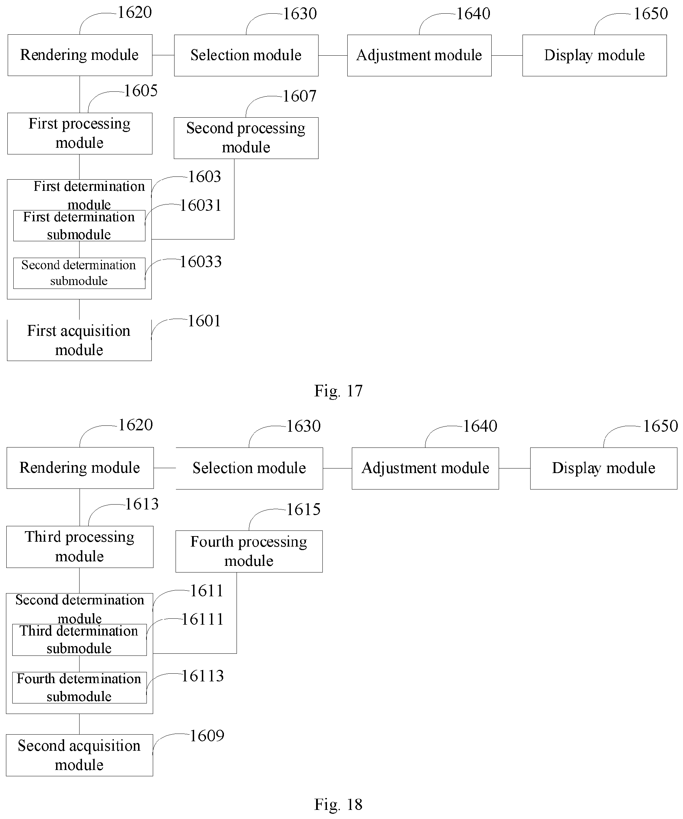

In some optional examples, as shown in Fig. 17, the apparatus further includes:

a first acquisition module 1601 configured to acquire a relative attitude of the head-mounted display relative to a movable platform on which the head-mounted display is located;

a first determination module 1603 configured to determine a target working mode adapted to the head-mounted display based on the relative attitude;

a first processing module 1605 configured to: in response to the target working mode being a first preset working mode, set the head-mounted display to the first preset working mode, and trigger the rendering module 1620, the selection module 1630, the adjustment module 1640 and the display module 1650; and

a second processing module 1607 configured to: in response to the target working mode being the second preset working mode, set the head-mounted display to the second preset working mode, and display, through the head-mounted display, an adjusted image obtained based on the preset position, the to-be-displayed image and an actual attitude sequence; wherein the actual attitude sequence includes an actual attitude of the head-mounted display in a world coordinate system at each of the plurality of historical moments.

In some optional examples, as shown in Fig. 17, the first determination module 1603 includes:

a first determination submodule 16031 configured to: in response to one of the following four conditions being satisfied, determine that the target working mode adapted to the head-mounted display is the second preset working mode: the relative attitude is greater than the preset relative attitude threshold; in the most recent preset time period, the relative attitude corresponding to each moment is greater than the preset relative attitude threshold; in the most recent preset time period, the relative attitudes corresponding to more than the preset number of moments are greater than the preset relative attitude threshold; and the changing trend of the relative attitude is an increasing trend; and

a second determination submodule 16033 configured to: in response to one of the following four conditions being satisfied, determine that the target working mode adapted to the head-mounted display is the first preset working mode: the relative attitude is less than or equal to a preset relative attitude threshold; in the most recent preset time period, the relative attitude corresponding to each moment is less than or equal to the preset relative attitude threshold; in the most recent preset time period, the relative attitudes corresponding to more than a preset number of moments are less than or equal to the preset relative attitude threshold; and the changing trend of the relative attitude is a decreasing trend.

In some optional examples, as shown in Fig. 18, the apparatus further includes:

a second acquisition module 1609 configured to acquire a motion state of the head-mounted display in the world coordinate system;

a second determination module 1611 configured to determine the target working mode adapted to the head-mounted display based on the motion state;

a third processing module 1613 configured to: in response to the target working mode being the first preset working mode, set the head-mounted display to the first preset working mode, and trigger the rendering module 1620, the selection module 1630, the adjustment module 1640 and the display module 1650; and

a fourth processing module 1615 configured to: in response to the target working mode being the third preset working mode, set the head-mounted display to the third preset working mode, render the to-be-displayed image based on the preset position and the preset attitude, and display the rendered to-be-displayed image through the head-mounted display.

In some optional examples, as shown in Fig. 18, the second determination module 1611 includes:

a third determination submodule 16111 configured to: in response to the motion state being either a stationary state or a uniform linear motion state, determine that the target working mode adapted to the head-mounted display is the third preset working mode; and

a fourth determination submodule 16113 configured to: in response to the motion state being a state different from the stationary state and the uniform linear motion state, determine that the target working mode adapted to the head-mounted display is the first preset working mode.

In some optional examples, the head-mounted display is located on a movable platform, and the head-mounted display satisfies one of the following two conditions:

the head-mounted display is fixedly mounted on the movable platform; and
the head-mounted display can move relative to the movable platform.

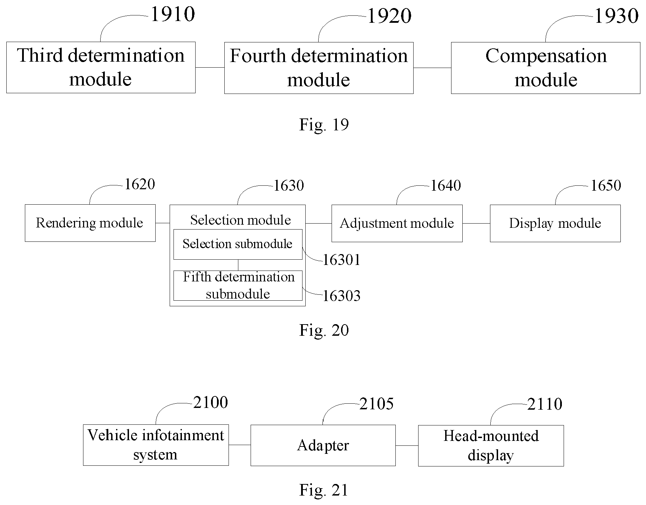

In some optional examples, if two adjacent corrected attitudes in the corrected attitude sequence are a first corrected attitude and a second corrected attitude, the historical moment corresponding to the first corrected attitude is represented as a first historical moment, the historical moment corresponding to the second corrected attitude is represented as a second historical moment, and the first historical moment is earlier than the second historical moment, then as shown in Fig. 19, the second corrected attitude is determined by the following modules:

a third determination module 1910 configured to determine a reference attitude in the coordinate system of the head-mounted display at the second historical moment based on angular velocity data of the head-mounted display at the second historical moment and the first corrected attitude corresponding to the first historical moment;
a fourth determination module 1920 configured to determine a corrected attitude difference based on an attitude error between the reference attitude and the preset attitude; and
a compensation module 1930 configured to compensate the reference attitude with the corrected attitude difference to obtain the second corrected attitude corresponding to the second historical moment.

In some optional examples, as shown in Fig. 20, the selection module 1630 includes:

a selection submodule 16301 configured to select the corrected attitude corresponding to the latest determination time from the corrected attitude sequence; and
a fifth determination submodule 16303 configured to take the selected corrected attitude as the target corrected attitude.

In an apparatus of the present disclosure, various optional embodiments, optional implementation manners and optional examples disclosed above can be flexibly selected and combined as required to achieve corresponding functions and effects, which will not be enumerated one by one in the present disclosure.

Exemplary system

Embodiments of the present disclosure also provide a structural schematic diagram of a system for displaying an image on the head-mounted display. As shown in Fig. 21, the system includes a vehicle infotainment system 2100, an adapter 2105, and a head-mounted display 2110. The head-mounted display 2110 is connected to the vehicle infotainment system 2100 through the adapter 2105.

The vehicle infotainment system 2100 is configured to render the to-be-displayed image of the head-mounted display 2110 based on the preset position and preset attitude in a coordinate system of the head-mounted display, and send the rendered to-be-displayed image to the head-mounted display 2110;

The adapter 2105 is configured to select a target corrected attitude from the corrected attitude sequence for the rendered to-be-displayed image, and adjust the rendered to-be-displayed image based on the preset position and the target corrected attitude to obtain an adjusted image, wherein the corrected attitude sequence includes the corrected attitude at each of the plurality of historical moments; the corrected attitude corresponding to any non-earliest historical moment among the plurality of historical moments is determined based on the angular velocity data of the head-mounted display 2110 at that historical moment, the corrected attitude corresponding to the previous historical moment to that historical moment, and the preset attitude. The angular velocity data is collected by the head-mounted display 2110 and sent to the adapter 2105; and

The head-mounted display 2110 is configured to display the adjusted image.

In some optional embodiments, the head-mounted display 2110 may be AR (Augmented Reality) glasses, VR (Virtual Reality) glasses, etc.

In some optional embodiments, the vehicle infotainment system 2100 and the adapter 2105 as well as the adapter 2105 and the head-mounted display 2110 can be connected in a wired manner for communication, or can be connected in a wireless manner for communication.

It should be noted that the system provided in the embodiments of the present disclosure can be regarded as a split type head-mounted display including two computing devices. In this system, the head-mounted display 2110 can be configured to display an image. The vehicle infotainment system 2100 is communicatively connected to the head-mounted display 2110 through the adapter 2105, and both the vehicle infotainment system 2100 and the adapter 2105 jointly serve as computing devices. By operating the split type head-mounted display, the method for displaying an image on the head-mounted display in the above embodiments of the present disclosure can be implemented. Optionally, the adapter 2105 and the head-mounted display 2110 can also be an integrated all-in-one device, that is, in terms of appearance, the adapter 2105 and the head-mounted display 2110 are one device. For specific implementations and achievable effects, please refer to the relevant introduction in the above method embodiments, and details are not repeated herein.

In some optional examples, the adapter 2105 is further configured to:

render the control identifier corresponding to the to-be-displayed image, and synthesize the rendered control identifier with the rendered to-be-displayed image to obtain a synthesized image; and
adjust the synthesized image based on the preset position and the target corrected attitude to obtain an adjusted image.

It should be noted that for the type of the control identifier, please refer to the relevant description in the overview part of the above application, and for the adjustment method of the synthesized image, please refer to the introduction of the adjustment method of the rendered to-be-processed image in the above method embodiments, and details are not repeated herein.

In the embodiments of the present disclosure, by synthesizing the rendered control identifier and the rendered to-be-displayed image to obtain a synthesized image, and adjusting the synthesized image to obtain an adjusted image, the control identifier can be displayed through the head-mounted display, and the control identifier can be used for human-computer interaction. For example, the user can move a web page, a video playback window and the like in the adjusted image from one position in the virtual space to another position through the control identifier. Alternatively, the user can switch the web page in the adjusted image to another web page. Furthermore, the user can close the web page in the adjusted image.

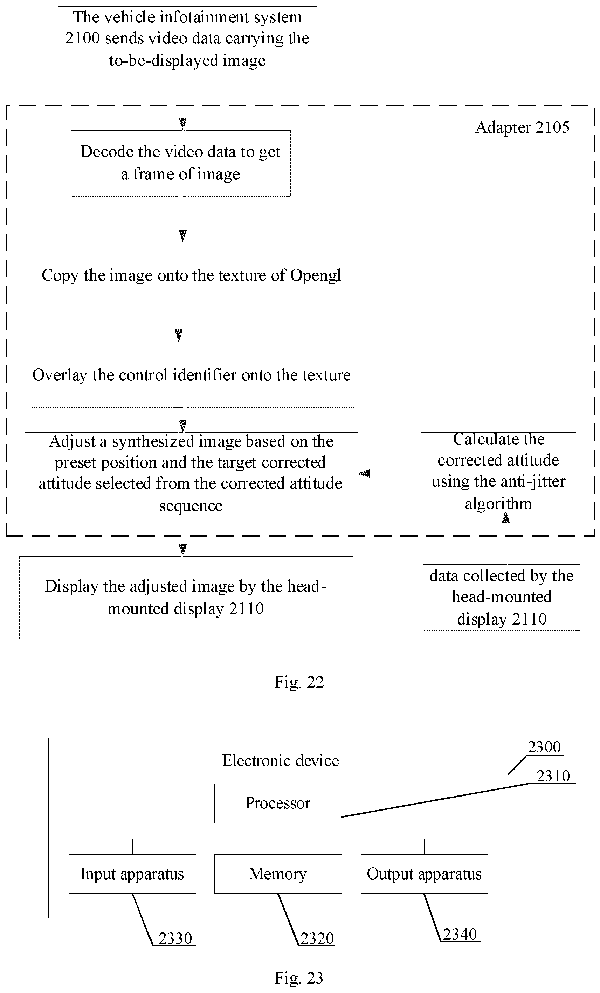

In some optional examples, as shown in Fig. 22, the vehicle infotainment system 2100 can first render the to-be-displayed image that does not include a control identifier. The vehicle infotainment system 2100 can also send video data carrying the to-be-displayed image to the adapter 2105. The adapter 2105 decodes the video data, and can obtain a frame of image (corresponding to the to-be-displayed image). In addition, an image copy function of Opengl (an image processing library that can be used to perform operations such as image copying, rendering, and overlaying) can be used to copy the obtained image onto the texture of Opengl, and overlay the control identifier onto the texture to obtain a synthesized to-be-displayed image (equivalent to the synthesized image described above).

The adapter 2105 can adjust a synthesized image based on the preset position and the target corrected attitude selected from the corrected attitude sequence to obtain an adjusted image. The adapter 2105 can transmit the obtained adjusted image to the head-mounted display 2110 in a wired or wireless manner. The head-mounted display 2110 can display the adjusted image, thereby effectively ensuring stability of the image provided by the head-mounted display 2110, and enhancing the usage experience of the user.

Exemplary electronic device

The electronic device according to the embodiments of the present disclosure is described below with reference to Fig. 23. The electronic device may be either or both of a first device and a second device, or a stand-alone device independent thereof. The stand-alone device may communicate with the first device and the second device to receive collected input signals therefrom.

Fig. 23 shows a block diagram of an electronic device 2300 in the embodiments of the present disclosure.

As shown in Fig. 23, the electronic device 2300 includes one or more processors 2310 and a memory 2320.

The processor 2310 may be a central processing unit (CPU) or other processing units having data processing capabilities and/or instruction execution capabilities, and may control other components in the electronic device 2300 to perform desired functions.

The memory 2320 may include one or more computer program products, and the program products may include various forms of computer-readable storage media, such as a volatile memory and/or a non-volatile memory. The volatile memory may include a random-access memory (RAM) and/or a cache memory. The non-volatile memory may include a read-only memory (ROM), a hard disc, a flash memory, etc. One or more computer program instructions may be stored in the computer-readable storage medium, and the processor 2310 may execute the program instructions to implement the method for displaying an image on a head-mounted display in various embodiments of the present disclosure described above and/or other desired functions. Various contents such as input signals, signal components, noise components, etc. may also be stored in the computer-readable storage medium.

In one example, the electronic device 2300 may further include: an input apparatus 2330 and an output apparatus 2340, and these components are interconnected via a bus system and/or other forms of connection mechanisms (not shown).

If the electronic device 2300 is the first device or the second device, the input apparatus 2330 may be a microphone or a microphone array. If the electronic device 2300 is a stand-alone device, the input apparatus 2330 may be a communication network connector for receiving the collected input signals from the first device and the second device. The input apparatus 2330 may also include a keyboard, a mouse, etc.

The output apparatus 2340 can output various information to the outside. The output apparatus 2340 may include, for example, a display, a loudspeaker, a printer, a communication network, and a remote output apparatus connected thereto, and so on.

Fig. 23 only shows some of the components related to the present disclosure in the electronic device 2300, omitting components such as buses and input/output interfaces. Depending on specific situations, the electronic device 2300 may also include other appropriate components.

Exemplary computer program product and computer-readable storage medium

In addition to the method and device described above, embodiments of the present disclosure may also be a computer program product including computer program instructions. The computer program instructions, when executed by a processor, cause the processor to execute the steps of the method for displaying an image on a head-mounted display according to various embodiments of the present disclosure as described in the above-described "Exemplary method" section of this specification.

The computer program product may use any combination of one or more programming languages to write program code for performing operations of the embodiments of the present disclosure. The programming languages include an object-oriented programming language such as Java or C++, and also include a conventional procedural programming language, such as "C" language or a similar programming language. The program code may be executed entirely on a user's computing device, partly on a user's device, as an independent software package, partly on a user's computing device and partly on a remote computing device, or entirely on a remote computing device or server.

In addition, embodiments of the present disclosure may also be a computer-readable storage medium configured to store computer program instructions therein. The computer program instructions, when executed by a processor, cause the processor to execute the steps of the method for displaying an image on a head-mounted display according to various embodiments of the present disclosure as described in the above-described "Exemplary method" section of this specification.

The computer-readable storage medium may be any combination of one or more readable media. The readable medium may be a readable signal medium or a readable storage medium. The readable storage medium may include, for example, but is not limited to, an electronic, magnetic, optical, electromagnetic, infrared, or semiconductor system, apparatus or device, or any combination thereof. More specific examples (a non-exhaustive list) of the readable storage medium include: an electrical connection with one or more conducting wires, a portable disc, a hard disc, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination thereof.

Basic principles of the present disclosure have been described above in conjunction with specific embodiments. It should be noted that the advantages, benefits, effects and the like mentioned in the present disclosure are merely examples and not limitations, and it cannot be considered that these advantages, benefits, effects and the like are essential for each embodiment of the present disclosure. Specific details disclosed above are merely for the purpose of illustration and ease of understanding, and are not limiting, and the above details do not mean that the present disclosure must be implemented by means of the above specific details.

The embodiments in the specification are described in a progressive manner. Each embodiment focuses on differences from other embodiments. For the same and similar parts between the embodiments, reference can be made to each other. A system embodiment, which substantially corresponds to a method embodiment, is described relatively simply, and for its relevant parts, reference may be made to parts of description of the method embodiment.

Block diagrams of devices, apparatuses, equipment, and systems involved in the present disclosure are only used as illustrative examples and are not intended to require or imply that they are necessarily connected, arranged, or configured in the manner illustrated in the block diagrams. As will be recognized by those skilled in the art, these devices, apparatuses, equipment, and systems may be connected, arranged, or configured in any manner. Words such as "include", "comprise", "have", etc. are open-ended terms, mean "include but not limited to" and may be used interchangeably. The words "or" and "and" as used herein refer to the words "and/or", and may be used interchangeably therewith unless the context clearly indicates otherwise. The word "such as" as used herein refers to the phrase "such as, but not limited to", and may be used interchangeably therewith.

The method and apparatus of the present disclosure may be implemented in many ways. For example, the method and apparatus of the present disclosure may be implemented by software, hardware, firmware, or any combination of software, hardware, and firmware. The above order for the steps of the described method is only for an illustrative purpose, and the steps of the methods of the present disclosure are not limited to the order specifically described above, unless otherwise specified. Additionally, in some embodiments, the present disclosure may also be implemented as programs recorded in a recording medium. The programs include machine-readable instructions for implementing the method according to the present disclosure. Thus, the present disclosure also covers a recording medium that stores programs for performing the method according to the present disclosure.

It is also to be noted that in the apparatus, device, and method of the present disclosure, the components or steps are decomposable and/or recombinable. These decompositions and/or recombinations should be considered as equivalents of the present disclosure.

The above description of the disclosed aspects is provided to enable those skilled in the art to make or use the present disclosure. Various modifications made to these aspects will be obvious to those skilled in the art, and the general principles defined herein can be applied to other aspects without departing from the scope of the present disclosure. The present disclosure is not intended to be limited to the aspects shown herein but is in accordance with the broadest scope consistent with the principles and novel features disclosed herein.

The above description has been made for purposes of illustration and description. In addition, this description is not intended to limit the embodiments of the present disclosure to the forms disclosed herein. Although a plurality of example aspects and embodiments have been discussed above, certain variations, modifications, changes, additions, and sub-combinations thereof would occur to those skilled in the art.

## Claims

1.  A method for displaying an image on a head-mounted display, comprising:

    rendering a to-be-displayed image of the head-mounted display based on a preset position and a preset attitude in a coordinate system of the head-mounted display;
    selecting a target corrected attitude from a corrected attitude sequence for a rendered to-be-displayed image; wherein the corrected attitude sequence comprises a corrected attitude at each of a plurality of historical moments, and a corrected attitude corresponding to any non-earliest historical moment among the plurality of historical moments is determined based on angular velocity data of the head-mounted display at that historical moment, a corrected attitude corresponding to a previous historical moment to that historical moment, and the preset attitude;
    adjusting the rendered to-be-displayed image based on the preset position and the target corrected attitude to obtain an adjusted image; and
    displaying the adjusted image through the head-mounted display.

2.  The method according to claim 1, further comprising:

    acquiring a relative attitude of the head-mounted display relative to a movable platform on which the head-mounted display is located;
    determining a target working mode adapted to the head-mounted display based on the relative attitude;
    in response to the target working mode being a first preset working mode, setting the head-mounted display to the first preset working mode, and performing the step of rendering the to-be-displayed image, the step of selecting the target corrected attitude, the step of obtaining an adjusted image, and the step of displaying the adjusted image through the head-mounted display described in claim 1; and
    in response to the target working mode being a second preset working mode, setting the head-mounted display to the second preset working mode, and displaying, through the head-mounted display, an adjusted image obtained based on the preset position, the to-be-displayed image, and an actual attitude sequence; wherein the actual attitude sequence comprises an actual attitude of the head-mounted display in a world coordinate system at each of the plurality of historical moments.

3.  The method according to claim 2, wherein determining a target working mode adapted to the head-mounted display based on the relative attitude comprises:

    in response to one of the following four situations being satisfied, determining that the target working mode adapted to the head-mounted display is the second preset working mode:

    the relative attitude is greater than a preset relative attitude threshold;
    during the most recent preset time period, the relative attitude corresponding to each moment is greater than the preset relative attitude threshold;
    during the most recent preset time period, the relative attitude corresponding to more than a preset number of moments is greater than the preset relative attitude threshold; and
    a changing trend of the relative attitude is an increasing trend; and

    in response to one of the following four situations being satisfied, determining that the target working mode adapted to the head-mounted display is the first preset working mode:

    the relative attitude is less than or equal to the preset relative attitude threshold;
    during the most recent preset time period, the relative attitude corresponding to each moment is less than or equal to the preset relative attitude threshold;
    during the most recent preset time period, the relative attitude corresponding to more than the preset number of moments is less than or equal to the preset relative attitude threshold; and a changing trend of the relative attitude is a decreasing trend.

4.  The method according to claim 1, further comprising:

    acquiring a motion state of the head-mounted display in a world coordinate system;
    determining a target working mode adapted to the head-mounted display based on the motion state;
    in response to the target working mode being a first preset working mode, setting the head-mounted display to the first preset working mode, and performing the step of rendering the to-be-displayed image, the step of selecting the target corrected attitude, the step of obtaining an adjusted image, and the step of displaying the adjusted image through the head-mounted display described in claim 1; and

in response to the target working mode being a third preset working mode, setting the head-mounted display to the third preset working mode, rendering the to-be-displayed image based on the preset position and the preset attitude, and displaying the rendered to-be-displayed image through the head-mounted display.

5. The method according to claim 4, wherein determining a target working mode adapted to the head-mounted display based on the motion state comprises:

in response to the motion state being either a stationary state or a uniform linear motion state, determining that the target working mode adapted to the head-mounted display is the third preset working mode; and

in response to the motion state being a state different from the stationary state and the uniform linear motion state, determining that the target working mode adapted to the head-mounted display is the first preset working mode.

6. The method according to claim 1, further comprising:

acquiring a target working mode adapted to the head-mounted display;

in response to the target working mode being a first preset working mode, setting the head-mounted display to the first preset working mode, and performing the step of rendering the to-be-displayed image, the step of selecting the target corrected attitude, the step of obtaining an adjusted image, and the step of displaying the adjusted image through the head-mounted display described in claim 1; and

in response to the target working mode being a second preset working mode, setting the head-mounted display to the second preset working mode, and displaying, through the head-mounted display, an adjusted image obtained based on the preset position, the to-be-displayed image, and an actual attitude sequence;

wherein the actual attitude sequence comprises an actual attitude of the head-mounted display in the world coordinate system at each of the plurality of historical moments.

7. The method according to claim 1, further comprising:

acquiring the target working mode adapted to the head-mounted display;

in response to the target working mode being a first preset working mode, setting the head-mounted display to the first preset working mode, and performing the step of rendering the to-be-displayed image, the step of selecting the target corrected attitude, the step of obtaining an adjusted image, and the step of displaying the adjusted image through the head-mounted display described in claim 1; and

in response to the target working mode being the third preset working mode, setting the head-mounted display to the third preset working mode, rendering a to-be-displayed image based on the preset position and the preset attitude, and displaying a rendered to-be-displayed image through the head-mounted display.

8. The method according to any one of claims 1 to 7, wherein the head-mounted display is located on a movable platform, and the head-mounted display satisfies one of the following two conditions:

the head-mounted display is fixedly mounted on the movable platform; and

the head-mounted display is movable relative to the movable platform.

9. The method according to any one of claims 1 to 8, wherein if two adjacent corrected attitudes in the corrected attitude sequence are a first corrected attitude and a second corrected attitude, the historical moment corresponding to the first corrected attitude is represented as a first historical moment, the historical moment corresponding to the second corrected attitude is represented as a second historical moment, and the first historical moment is earlier than the second historical moment, then the second corrected attitude is determined in the following way:

determining a reference attitude in the coordinate system of the head-mounted display at the second historical moment based on angular velocity data of the head-mounted display at the second historical moment and the first corrected attitude corresponding to the first historical moment;

determining a corrected attitude difference based on an attitude error between the reference attitude and the preset attitude; and

compensating the reference attitude with the corrected attitude difference to obtain the second corrected attitude corresponding to the second historical moment.

10. The method according to any one of claims 1 to 9, wherein selecting a target corrected attitude from a corrected attitude sequence for the rendered to-be-displayed image comprises:

   selecting the corrected attitude corresponding to the latest determination time from the corrected attitude sequence; and
   taking the selected corrected attitude as the target corrected attitude.

11. The method according to any one of claims 1 to 10, wherein the displaying the adjusted image through the head-mounted display comprises displaying, through the head-mounted display, the adjusted image that slowly follows the coordinate system of the head-mounted display.

12. A system for displaying an image on a head-mounted display, comprising: a vehicle infotainment system, an adapter, and a head-mounted display, wherein the head-mounted display is connected to the vehicle infotainment system through the adapter; wherein

   the vehicle infotainment system is configured to render a to-be-displayed image of the head-mounted display based on a preset position and a preset attitude in a coordinate system of the head-mounted display, and send a rendered to-be-displayed image to the adapter;
   the adapter is configured to select a target corrected attitude from a corrected attitude sequence for the rendered to-be-displayed image, and adjust the rendered to-be-displayed image based on the preset position and the target corrected attitude to obtain an adjusted image; wherein the corrected attitude sequence comprises a corrected attitude at each of the plurality of historical moments; a corrected attitude corresponding to any non-earliest historical moment among the plurality of historical moments is determined based on angular velocity data of the head-mounted display at that historical moment, a corrected attitude corresponding to the previous historical moment to that historical moment, and the preset attitude, and the angular velocity data is collected by the head-mounted display and sent to the adapter; and
   the head-mounted display is configured to display the adjusted image.

13. The system according to claim 12, wherein the adapter is further configured to:

   render a control identifier corresponding to the to-be-displayed image, and synthesize a rendered control identifier with the rendered to-be-displayed image to obtain a synthesized image; and
adjust the synthesized image based on the preset position and the target corrected attitude to obtain the adjusted image.

14. The system according to claim 12 or 13, wherein the adapter and the head-mounted display are integrated into an all-in-one device.

15. A computer-readable storage medium having stored computer program instructions thereon, wherein when executed by a processor, the computer program instructions implement the method for displaying an image on the head-mounted display mentioned in any one of claims 1 to 11.

Render a to-be-displayed image on a head-mounted display based on a preset position and a preset attitude in a coordinate system of the head-mounted display ⌐120

Select a target corrected attitude from a corrected attitude sequence for the rendered to-be-displayed image; wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment of that historical moment, and the preset attitude ⌐130

Adjust the rendered to-be-displayed image based on the preset position and the target corrected attitude to obtain an adjusted image ⌐140

Display the adjusted image through the head-mounted display ⌐150

Fig. 1

Render a to-be-displayed image on a head-mounted display based on a preset position and a preset attitude in a coordinate system of the head-mounted display ⌐120

Select the corrected attitude corresponding to the latest determination time from the corrected attitude sequence ⌐130 ⌐1301

Take the selected corrected attitude as the target corrected attitude ⌐1303

Adjust the rendered to-be-displayed image based on the preset position and the target corrected attitude, to obtain an adjusted image ⌐140

Display the adjusted image through the head-mounted display ⌐150

Fig. 2

| Determine a reference attitude in the coordinate system of the head-mounted display at the second historical moment based on angular velocity data of the head-mounted display at the second historical moment and the first corrected attitude corresponding to the first historical moment | 310 |
|---|---|

| Determine a corrected attitude difference based on an attitude error between the reference attitude and the preset attitude | 320 |
|---|---|

| Compensate the reference attitude with the corrected attitude difference to obtain the second corrected attitude corresponding to the second historical moment | 330 |
|---|---|

Fig. 3

Fig. 4-1

Fig. 4-2

Acquire a relative attitude of the head-mounted display device relative to a movable platform on which the head-mounted display device is located ⌐ 101

Determine a target working mode adapted to the head-mounted display based on the relative attitude ⌐ 103

In response to the target working mode being a first preset working mode, set the head-mounted display to the first preset working mode ⌐ 105

In response to the target working mode being the second preset working mode, set the head-mounted display to the second preset working mode, and display, through the head-mounted display, an adjusted image obtained based on the preset position, the to-be-displayed image and an actual attitude sequence; wherein the actual attitude sequence includes an actual attitude of the head-mounted display in a world coordinate system at each of the plurality of historical moments ⌐ 107

Render a to-be-displayed image on a head-mounted display based on a preset position and a preset attitude in a coordinate system of the head-mounted display ⌐ 120

Select the target corrected attitude from the corrected attitude sequence for the rendered to-be-displayed image, wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment of that historical moment, and the preset attitude ⌐ 130

Adjust the rendered to-be-displayed image based on the preset position and the target corrected attitude, to obtain an adjusted image ⌐ 140

Display the adjusted image through the head-mounted display ⌐ 150

Fig. 5

t0        t1        t2

Rendered image        Warped image

T0        T1        T2

Fig. 6

Acquire a relative attitude of the head-mounted display relative to a mobile platform on which the head-mounted display is located — 101

In response to one of the following four conditions being satisfied, determine that the target working mode adapted to the head-mounted display is the second preset working mode: the relative attitude is greater than the preset relative attitude threshold; in the most recent preset time period, the relative attitude corresponding to each moment is greater than the preset relative attitude threshold; in the most recent preset time period, the relative attitudes corresponding to more than a preset number of moments are greater than the preset relative attitude threshold; and the changing trend of the relative attitude is an increasing trend — 103 / 1031

In response to one of the following four conditions being satisfied, determine that the target working mode adapted to the head-mounted display is the first preset working mode: the relative attitude is less than or equal to the preset relative attitude threshold; in the most recent preset time period, the relative attitude corresponding to each moment is less than or equal to the preset relative attitude threshold; in the most recent preset time period, the relative attitudes corresponding to more than a preset number of moments are less than or equal to the preset relative attitude threshold; and the changing trend of the relative attitude is a decreasing trend — 1033

In response to the target working mode being a first preset working mode, set the head-mounted display to the first preset working mode — 105

In response to the target working mode being the second preset working mode, set the head-mounted display to the second preset working mode, and display, through the head-mounted display, an adjusted image obtained based on the preset position, the to-be-displayed image and an actual attitude sequence; wherein the actual attitude sequence includes an actual attitude of the head-mounted display in a world coordinate system at each of the plurality of historical moments — 107

Render a to-be-displayed image on a head-mounted display based on a preset position and a preset attitude in a coordinate system of the head-mounted display — 120

Select the target corrected attitude from the corrected attitude sequence for the rendered to-be-displayed image, wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment of that historical moment, and the preset attitude — 130

Adjust the rendered to-be-displayed image based on the preset position and the target corrected attitude, to obtain an adjusted image — 140

Display the adjusted image through the head-mounted display — 150

Fig. 7

Acquire a motion state of the head-mounted display in the world coordinate system ⌐109

Determine a target working mode adapted to the head-mounted display based on the motion state ⌐111

In response to the target working mode being a first preset working mode, set the head-mounted display to the first preset working mode ⌐113

In response to the target working mode being a third preset working mode, set the head-mounted display to the third preset working mode, render a to-be-displayed image of the head-mounted display based on a preset position and a preset attitude, and display the rendered to-be-displayed image through the head-mounted display ⌐115

Render a to-be-displayed image on a head-mounted display based on a preset position and a preset attitude in a coordinate system of the head-mounted display ⌐120

Select the target corrected attitude from the corrected attitude sequence for the rendered to-be-displayed image, wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment of that historical moment, and the preset attitude ⌐130

Adjust the rendered to-be-displayed image based on the preset position and the target corrected attitude, to obtain an adjusted image ⌐140

Display the adjusted image through the head-mounted display ⌐150

Fig. 8

Rendered
image

T0          T1

Fig. 9

Acquire a motion state of the head-mounted display in the world coordinate system — 109

In response to the motion state being either a stationary state or a uniform linear motion state, determine that the target working mode adapted to the head-mounted display is the third preset working mode — 1111

— 111

In response to the motion state being a state different from the stationary state and the uniform linear motion state, determine that the target working mode adapted to the head-mounted display is the first preset working mode — 1113

In response to the target working mode being a first preset working mode, set the head-mounted display to the first preset working mode — 113

In response to the target working mode being a third preset working mode, set the head-mounted display to the third preset working mode, render a to-be-displayed image of the head-mounted display based on a preset position and a preset attitude, and display the rendered to-be-displayed image through the head-mounted display — 115

Render a to-be-displayed image of a head-mounted display based on a preset position and a preset attitude in a coordinate system of the head-mounted display — 120

Select the target corrected attitude from the corrected attitude sequence for the rendered to-be-displayed image, wherein the corrected attitude sequence includes a corrected attitude at each of a plurality of historical moments, and the corrected attitude corresponding to any non-earliest historical moment among the plurality of historical moments is determined based on angular velocity data of the head-mounted display at that historical moment, a corrected attitude corresponding to a previous historical moment to that historical moment, and the preset attitude — 130

Adjust the rendered to-be-displayed image based on the preset position and the target corrected attitude, to obtain an adjusted image — 140

Display the adjusted image through the head-mounted display — 150

Fig. 10

Fig. 11-1

Fig. 11-2

Fig. 11-3

Fig. 11-4

Fig. 12

Fig. 13-1

Fig. 13-2

Fig. 13-3

Fig. 13-4

The vehicle first goes left, and then turns upwards

Fig. 14

Fig. 15-1

Fig. 15-2

Fig. 15-3

Fig. 15-4

Fig. 15-5

Fig. 15-6

| ⌒1620 | | ⌒1630 | | ⌒1640 | | ⌒1650 |
|---|---|---|---|---|---|---|
| Rendering module | — | Selection module | — | Adjustment module | — | Display module |

Fig. 16

1620

Rendering module

1630

Selection module

1640

Adjustment module

1650

Display module

1605

First processing module

1607

Second processing module

1603

First determination module

16031

First determination submodule

16033

Second determination submodule

1601

First acquisition module

Fig. 17

1620

Rendering module

1630

Selection module

1640

Adjustment module

1650

Display module

1613

Third processing module

1615

Fourth processing module

1611

Second determination module

16111

Third determination submodule

16113

Fourth determination submodule

1609

Second acquisition module

Fig. 18

Fig. 19

Fig. 20

Fig. 21

The vehicle infotainment system 2100 sends video data carrying the to-be-displayed image

Adapter 2105

Decode the video data to get a frame of image

Copy the image onto the texture of Opengl

Overlay the control identifier onto the texture

Adjust a synthesized image based on the preset position and the target corrected attitude selected from the corrected attitude sequence

Calculate the corrected attitude using the anti-jitter algorithm

Display the adjusted image by the head-mounted display 2110

data collected by the head-mounted display 2110

Fig. 22

Electronic device

2300

2310

Processor

Input apparatus

Memory

Output apparatus

2330

2320

2340

Fig. 23

## INTERNATIONAL SEARCH REPORT

| International application No. |
| --- |
| **PCT/CN2023/134511** |

**A.    CLASSIFICATION OF SUBJECT MATTER**

G06T 15/00(2011.01)i；G06F 3/01(2006.01)i

According to International Patent Classification (IPC) or to both national classification and IPC

**B.    FIELDS SEARCHED**

Minimum documentation searched (classification system followed by classification symbols)

IPC： G06T G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 位置, 姿态, 渲染, 修正, 角速度, position, posture, render +, correct+, angular velocity

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114979615 A (MATRIXED REALITY TECHNOLOGY CO., LTD.) 30 August 2022 (2022-08-30)<br>description, paragraphs [0003]-[0229] | 1-15 |
| A | CN 105892658 A (HUAWEI TECHNOLOGIES CO., LTD.) 24 August 2016 (2016-08-24)<br>entire document | 1-15 |
| A | CN 112132940 A (BEIJING SENSETIME SCIENCE TECHNOLOGY DEVELOPMENT CO., LTD.) 25 December 2020 (2020-12-25)<br>entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 December 2023** | **04 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134511**

| Patent document cited in search report | | | Publication date (day/month/year) | Patent family member(s) | | | Publication date (day/month/year) |
|---|---|---|---|---|---|---|---|
| CN | 114979615 | A | 30 August 2022 | None | | | |
| CN | 105892658 | A | 24 August 2016 | CN | 105892658 | B | 23 July 2019 |
| CN | 112132940 | A | 25 December 2020 | HK | 40039698 | A0 | 23 July 2021 |
| | | | | WO | 2022057308 | A1 | 24 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211696125